# EUROPÄISCHE PATENTSCHRIFT

(11) **EP 0 256 481 B1**
(45) Veröffentlichungstag und Bekanntmachung des Hinweises auf die Patenterteilung: **12.01.1994**
(21) Anmeldenummer: 87111563.0
(22) Anmeldetag: 10.08.1987
(51) Int. Cl.: G01S 7/52, G01S 7/62, G01S 15/89

(54) **Verfahren und Einrichtung zur adaptiven Fokussierung bei einem medizinischen Ultraschall-Bildgabegerät**
Method and equipment for adaptive focussing in a medical ultrasonic imaging apparatus
Procédé et appareillage pour la focalisation adaptative dans un appareil médical d'imagerie à ultrasons

(30) Priorität: 20.08.1986 DE 3628220
(43) Veröffentlichungstag der Anmeldung: 24.02.1988
(73) Patentinhaber: SIEMENS AKTIENGESELLSCHAFT, 80333 München (DE)
(72) Erfinder: Hassler, Dietrich, Dipl.-Ing., D-8525 Uttenreuth (DE); Härer, Wolfgang, Dipl.-Phys., D-8520 Erlangen (DE); Eschenbacher, Heinz, Dipl.-Ing., D-8520 Erlangen (DE)

(56) Entgegenhaltungen:
- EP-A- 0 068 052
- EP-A- 0 119 844
- US-A- 3 805 596
- US-A- 4 395 909
- IEEE TRANSACTIONS ON ULTRASONICS, FERROELECTRICS, AND FREQUENCY CONTROL, Band UFFC-33, Nr. 3, Mai 1986, Seiten 257-264, IEEE, New York, US; G.E. TRAHEY et al.: "Speckle pattern correlation with lateral aperture translation: experimental results and implications for spatial compounding"
- JOURNAL OF THE ACOUSTICAL SOCIETY OF AMERICA, Band 77, Nr. 1, Januar 1985, Seiten 144-152, Acoustical Society of America, New York, US; T. YOKOTA et al.: "Active incoherent ultrasonic imaging through an inhomogeneous layer"
- JOURNAL OF THE ACOUSTICAL SOCIETY OF AMERICA, Band 77, Nr. 2, Februar 1985, Seiten 567-572, Acoustical Society of America, New York, US; T. YOKOTA et al.: "Super-resolution ultrasonic imaging by using adaptive focusing"
- JOURNAL OF THE ACOUSTICAL SOCIETY OF AMERICA, Band 71, Nr. 1, Januar 1982, Seiten 100-109, Acoustical Society of America, New York, US; M. HIRAMA et al.: "Adaptive ultrasonic array imaging system through an inhomogeneous layer"
- IBM JOURNAL OF RESEARCH AND DEVELOPMENT, Band 26, Nr. 6, November 1982, Seiten 746-758, IBM Corp., New York, US; E.J. FARRELL: "Backscatter and attenuation imaging from ultrasonic scanning in medicine"

## Beschreibung

### 1. Einleitung

Die Erfindung bezieht sich auf ein Verfahren zur B-Bild-Darstellung einer Schnittebene eines Untersuchungsobjekts, das schalltechnisch gesehen mit störenden Inhomogenitäten behaftet ist, mit einem medizinischen Ultraschall-Bildgerät, welches ein Ultraschall-Array umfaßt, das aus einer Vielzahl von Elementarwandlern besteht, wobei das Verfahren in eine Adaptionsphase und eine darauf folgende Bilddarstellungsphase unterteilt ist, mit den Schritten:
a) in der Adaptionsphase wird die Schnittebene mittels einer vorgegebenen Sendeapertur des Ultraschall-Arrays durch fokussierte Ultraschall-Sendestrahlen abgetastet,
b) in der Adaptionsphase werden reflektierte Echosignale von den Elementarwandlern einer vorgegebenen aktiven Empfangsapertur des UItraschall-Arrays empfangen und die durch die Inhomogenitäten bedingten Störeffekte gemessen und
c) in der Adaptionsphase werden aus den Meßwerten Korrekturwerte für die Verzögerungszeiten der Signale der Elementarwandler gegenüber einer Standard-Fokussierung, die gültig ist für ein Untersuchungsobjekt ohne störende Inhomogenitäten, abgeleitet.

Die Erfindung bezieht sich außerdem auf ein medizinisches Ultraschall-Bildgerät zur B-Bild-Darstellung einer Schnittebene eines Untersuchungsobjekts, das schalltechnisch gesehen mit störenden Inhomogenitäten behaftet ist, mit einem Ultraschall- Array, das eine vorgegebenen aktiven Sendeapertur mit Elementarwandlern aufweist und das ebenfalls eine vorgegebene aktive Empfangsapertur mit einer Vielzahl von Elementarwandlern aufweist, denen eine erste Empfangsverzögerungseinrichtung zur Bildung einer Standard-Empfangsfokussierung, die gültig ist für ein Untersuchungsobjekt ohne störende Inhomogenitäten, und eine zweite Empfangsverzögerungseinrichtung zugeordnet sind, mit Mitteln zum Betrieb des Ultraschall-Bildgeräts in einer Adaptionsphase und einer anschließenden B-Bild-Darstellungsphase, die eine Einrichtung zur Ermittlung von Korrekturwerten umfassen, die in der Adaptionsphase die durch die Inhomogenitäten bedingten Störeffekte mißt und aus den Meßwerten Korrekturwerte ableitet, mit denen in der anschließenden B-Bild-Darstellungsphase die Störeffekte aufgrund der Inhomogenitäten kompensiert werden.

Bei dem Ultraschall-Bildgabegerät kann es sich sowohl um einen Linear-Scanner als auch um einen Sektor-Scanner handeln.

Bei modernen B-Bild-Scannern versucht man, durch Verwendung von Applikatoren (Ultraschall-Arrays) mit sehr großen aktiven Aperturen (meist im Empfangsfall) eine hohe Lateralauflösung zu erreichen. Dies Ziel wird im Fall homogener Phantome und bei einem Teil der untersuchten Patienten tatsächlich erreicht. Die Klarheit und Auflösung von Ultraschall-B-Bildern aus lebendem Gewebe ist aber oft deutlich geringer als diejenige aus Phantomen. Ein nicht vernachlässigbar kleiner Prozentsatz an Patienten ist nämlich schallphysikalisch so inhomogen, daß kein Gewinn aus der großen Apertur gezogen werden kann. Die entsprechenden Ultraschall-Bilder sind mit einem "Grauschleier" überzogen. Man führt dies auf die Ortsabhängigkeit der Schallgeschwindigkeit im Gewebe, insbesondere im Unterhaut-Fettgewebe, zurück, welche Brechungseffekte bewirkt.

Speziell auf dem Gebiet der hochwertigen B-Scanner mit sehr guter Auflösung, die praktisch nur unter Verwendung großer Aperturen erreicht werden kann, wäre es von Bedeutung, wenn es gelänge, den Prozentsatz der Patienten zu vergrößern, die mit hoher Bildqualität abgetastet werden können. Es wären also ein Verfahren und eine Einrichtung wünschenswert, die in einem medizinischen Ultraschall-Bildgabegerät bei der B-Bildgewinnung den Einfluß besonders der hautnahen Inhomogenitäten des untersuchten Patienten reduzieren oder sogar weitgehend eliminieren. Das Funktionsprinzip muß, um praxisgerecht zu arbeiten, ohne gravierende Nachteile für Patient und Untersucher anzuwenden sein. Als noch tolerable Erschwernis wäre es zu akzeptieren, wenn das Bild nicht in Echtzeit, sondern nur als Standbild bereitgestellt würde, oder wenn ein Echtzeit-Bild erst nach einer Wartezeit und beschränkt auf einen Applikationsort geliefert würde.

Ein Verfahren und ein Bilddarstellungssystem zur Untersuchung weichen Gewebes ist aus den PCT-Veröffentlichungen WO 84/01433 (= US-PS 4,484,477), WO 84/01434 (= US-PS 4,471,785) und WO 84/01435 bekannt. Danach werden Störungen der Bildqualität durch Korrektur der Verzögerungszeiten und Amplitudenbelegung der aktiven Apertur des Ultraschall-Arrays vermindert. Die Korrektur wird bevorzugt aufgrund einer Kreuzkorrelation von Signalen der Elementarwandlerelemente des Arrays durchgeführt, wobei nähere Angaben über das genaue Vorgehen nicht gemacht werden. Es wird Wert auf hohe Verarbeitungsgeschwindigkeit gelegt, was spezielle Rechenschaltungen und damit einen sehr hohen Aufwand erfordert. Eine kostengünstigere Ausgestaltung wäre wünschenswert.

In dem Artikel von T. Yokata, T. Sato, M. Hirama: "Active incoherent ultrasonic imaging through an inhomogenes layer", J. Acoust. Soc. Am. 77(1), January 1985, pp. 144-152, wird ein schon früher beschriebenes Verfahren "active incoherant imaging" dahingehend erweitert, daß eine inhomogene Schicht zwischen einer Objektebene und einer aktiven Apertur eines Arrays liegt. Dabei wird die rauminvariante Eigenschaft der räumlichen Frequenzkomponente ausgenutzt. Bei dem Verfahren werden zwei Fälle unterschieden. Im ersten Fall ist die inhomogene Schicht nahe der aktiven Apertur angeordnet und im zweiten Fall befindet sich die inhomogene Schicht in einem Abstand von der Apertur. In beiden Fällen werden die empfangenen Signale einer Fresnel-Approximation unterworfen. Das Verfahren setzt auch voraus, daß die Reflexionen in der Objektebene unabhängig vom Beschallungswinkel sind. Dieser vorausgesetzte Normreflektor ist jedoch in der Praxix selten anzutreffen.

In einem anderen Verfahren von M. Hirama, O. Ikeda und T. Sato, das unter dem Titel: "Adaptive ultrasonic array imaging system through an inhomogeneous layer" in J. Acoust. Soc. Am 71(1), Jan. 1982, pp. 100-109 erschienen ist, wird die komplexe Amplitudenverteilung einer inhomogenen Schicht näherungsweise über das Maß der Fokussierung ermittelt. Dazu wird die Korrelation zwischen dem gesendeten und dem empfangenen Reflexionssignal gemessen. Voraussetzung ist jedoch, daß die Lage eines Reflektors bekannt ist oder geschätzt wird.

Ein Verfahren der eingangs genannten Art mit einer Adaptionsphase und einer Bilddarstellungsphase und eine Einrichtung der eingangs genannten Art ist in der Patentschrift US 4 395 909 angegeben. Zur Bestimmung von Korrekturwerten, wenn das Untersuchungsobjekt störende Inhomogenitäten aufweist, ist ein Ultraschall-Sendewandler vorgesehen, der in der Adaptionsphase einen kurzen Ultraschall-Impuls aussendet. Der Sendewandler ist an der einem Ultraschall-Empfangsarray gegenüberliegenden Seite des Untersuchungsobjekts angeordnet. Die Lage des Sendewandlers bezüglich des Arrays muß bekannt sein, um die durch Inhomogenitäten bedingte Laufzeitabweichungen der vom Sendewandler gesendeten Impulse gegenüber dem homogenen Fall erkennen zu können. Aus den Laufzeitabweichungen werden Korrekturwerte ermittelt. In der darauffolgenden Bilddarstellungsphase wird anstatt des erstgenannten Sendewandlers ein weiterer Ultraschall-Sendewandler aktiviert, der auf derselben Seite des Untersuchungsobjekts angeordnet ist wie das Empfangsarray. Mit diesem Verfahren können jedoch nur Laufzeitschwankungen von Signalen im Untersuchungsobjekt kompensiert werden, die in der Nähe des ersten Sendewandlers reflektiert wurden. Liegt der Untersuchungsbereich an einer anderen Stelle im Untersuchungsobjekt, so können an dieser Stelle des Untersuchungsbereichs zusätzlich starke Reflektoren mit bekannter Lage angeordnet werden. Dann werden die Laufzeitschwankungen von den an den Reflektoren reflektierten Signalen ausgewertet, wenn sie vom erstgenannten Ultraschall-Sendewandler beschallt werden. Die Reflektoren können auch durch weitere Sendewandler mit bekannter Lage ersetzt werden. Dazu werden jedoch die Sendesignale und keine reflektierten Signale ausgewertet. Der Einsatz des Verfahrens ist auf Untersuchungen beschränkt, bei denen das Untersuchungsobjekt durchschallt werden kann, um die Laufzeitschwankungen zu ermitteln.

### 2. Aufgabe der Erfindung

Es ist Aufgabe der vorliegenden Erfindung, ein Verfahren und eine Einrichtung anzugeben, mit denen bei einem Ultraschall-Bildgabegerät mit Ultraschall-Array die Bildqualität bei der medizinischen Untersuchung von Patienten auf preisgünstige Weise gesteigert wird. Vorzugsweise soll der Einfluß der örtlichen Inhomogenitäten insbesondere im Unterhaut-Fettgewebe des jeweils untersuchten Patienten auf die Qualität des B-Bildes weitgehend reduziert werden.

### 3. Lösung der Aufgabe

Die Erfindung beruht auf der Überlegung, daß zunächst (d. h. vorab) ein Meßwert definiert werden muß, der bei der Untersuchung eines Patienten die Art der schallphysikalischen Inhomogenitäten des dem Ultraschall-Array vorgelagerten Gewebes beschreibt. Der örtliche Verlauf dieses Meßwerts läßt sich dann bei der eigentlichen (späteren) Untersuchung des Patienten in Form von Korrekturwerten berücksichtigen.

Die erstgenannte Aufgabe wird bei einem Verfahren der eingangs genannten Art dadurch gelöst, daß
d) die Korrekturwerte aus der Kreuzkorrelation der elektrischen Empfangs-Signale von den Elementarwandlern des Ultraschall-Arrays abgeleitet werden und daß
e) in der anschließenden B-Bild-Darstellungsphase für die Echtzeit-Untersuchungsdauer dieser Schnittebene bei der Emission und/oder beim Empfang die Verzögerungszeiten der aktiven Apertur des Ultraschall-Arrays in Abhängigkeit von den Korrekturwerten geändert werden, wodurch die Störeffekte aufgrund der Inhomogenitäten kompensiert werden.

Die zweitgenannte Aufgabe wird bei einem medizinischen Ultraschall-Bildgerät der eingangs genannten Art dadurch gelöst, daß die Einrichtung zur Ermittlung von Korrekturwerten einen Korrelator umfaßt, mit dem in der Adaptionsphase die Echosignale über eine vorgegebenen Korrelationsfunktion miteinander korreliert werden, daß dem Elementarwandler der aktiven Sendeapertur eine erste Sendeverzögerungseinrichtung zur Bildung einer Standard-Sendefokussierung zugeordnet ist, daß die Einrichtung zur Ermittlung von Korrekturwerten eingangsseitig mit den Ausgängen der ersten Empfangsverzögerungseinrichtung zur Bildung der Standard-Empfangsfokussierung und ausgangsseitig mit einer zweiten Sende- und/oder der zweiten Empfangsverzögerungseinrichtungen verbunden ist, die den Standard-Sende-bzw. Standard-Empfangsverzögerungseinrichtungen zugeordnet sind und deren Verzögerungszeiten von der Einrichtung zur Ermittlung von Korrekturwerten bestimmt sind.

Man kann sagen, daß das erfindungsgemäße Verfahren und die erfindungsgemäße Einrichtung auf einem Prinzip beruhen, das als das "Prinzip der adaptiven Antenne" oder das "Prinzip der adaptiven Aperturänderung" bezeichnet werden könnte.

Es werden hier also ein Verfahren und eine Einrichtung beschrieben, mittels derer in der Adaptionsphase die Störeffekte im Unterhaut-Fettgewebe einmal in der interessierenden Schnittebene gemessen und dann in der B-Darstellungsphase diese Störeffekte bei jedem Scan im Sinne einer "adaptiven Antenne" kompensiert werden. Die zunächst durchgeführte Messung der Störeffekte erfolgt ausschließlich aufgrund der aus dem Körper des Patienten reflektierten Echosignale. Es werden für die Verarbeitung keine unrealistischen Bedingungen an diese Echo-Signale gestellt. Die Messung basiert vorzugsweise auf der Kreuzkorrelation der Echo-Signale von benachbarten Elementar- wandlern des Ultraschall-Arrays. Beispielsweise aus der Verschiebung des Maximums der Korrelationsfunktion gegen den Erwartungswert für den homogenen Fall werden Schallgeschwindigkeitsvariationen in der dem Ultraschall-Array unmittelbar vorgelagerten Untersuchungsstrecke des Patienten erfaßt. Aus den so gewonnenen Meßwerten werden die erwähnten Korrekturwerte für die Fokussierung beim Senden und/oder Empfangen in der anschließenden B-Bild-Darstellungsphase abgeleitet.

Bei der Untersuchung zweier unterschiedlicher Schnittebenen wird jedesmal eine gewisse Wartezeit in Kauf genommen, die durch die Ermittlung der Korrekturwerte in der jeweiligen Adaptionsphase bedingt ist.

Zur Sicherung der Messung gegen Artefakte werden bevorzugt starke Mittelungsmöglichkeiten vorgesehen.

Man kann sich die Anwendung der genannten Einrichtung zur Erzeugung einer "adaptiven Antenne" bei einem Ultraschall-B-Scanner folgendermaßen vorstellen: Der Applikator besitzt einen Tastknopf, mit dem in jeder neuen Scanposition, solange der Tastknopf gedrückt wird, die automatische Adaption ausgelöst wird. Je länger man den Tastknopf drückt, desto mehr komplette Scandurchläufe werden zur Datensicherung in der Adaptionsphase durchgeführt. Für besonders gute Adaption kippt der Untersucher das Ultraschall-Array während der Adaptionsphase geringfügig. Die kürzest mögliche Zeit für die Adaption beträgt ca. 120 ms. Nach der Adaption kann in der Untersuchungsphase in korrigierter Form ein schneller Scan durchgeführt werden, solange die Schnittebene nicht so stark verändert wird, daß merklich andere Strecken im Unterhaut-Fettgewebe durchlaufen werden. Das "Prinzip der adaptiven Antenne" ist also prinzipiell auch für die Herzdarstellung geeignet. Das Verkippen der Abtastebene in der Adaptionsphase erübrigt sich aber in diesem Anwendungsfall wegen der Eigenbewegung des Herzens.

Zu einer Verbesserung der Adaption kommt man durch Anwendung eines Iterationsverfahrens. Dieses besteht darin, daß die in einer vorangegangenen (z. B. ersten) Adaptionsphase gewonnenen Korrekturwerte auch als Korrekturwerte für den nachfolgenden Sendefall, der die nächste (z. B. zweite) Adaptionsphase einleitet, verwendet werden. Damit bildet sich ein verbesserter Sendefokus heraus.

Weitere vorteilhafte Ausgestaltungen der Erfindung sind in den Unteransprüchen gekennzeichnet.

### 4. Kurzbeschreibung der Figuren

Ausführungsbeispiele der Erfindung werden im folgenden anhand der Zeichnungen näher erläutert. Es zeigen:
Fig. 1 ein Modell der Ultraschall-Ausbreitung in einem Untersuchungsobjekt mit wolkenförmigen Reflektoren,
Fig. 2 ein vereinfachtes Modell der Ultraschall-Ausbreitung in einem Untersuchungsobjekt mit Punktreflektor,
Fig. 3 einen vergrößerten Ausschnitt aus Fig. 2,
Fig. 4 ein Diagramm zur Messung der Werte LlTM aus der Kreuzkorrelation der Empfangssignale durch Aufsuchen des Maximums M,
Fig. 5 ein weiteres Diagramm zur Messung der Werte LlTM aus der Kreuzkorrelation der Empfangssignale durch Bildung von Momenten,
Fig. 6 die geometrischen Verhältnisse beim Parallelscan,
Fig. 7 die Aufaddition der Meßwerte beim Parallelscan,
Fig. 8 ein Diagramm für eine einfache Weiterverarbeitung,
Fig. 9 ein Diagramm zur Erläuterung einer alternativen Weiterverarbeitung, des sogenannten "Aligning" und der Mittelwertbildung,
Fig. 10 Gleichungen zum "Aligning" und zur Mittelwertbildung,
Fig. 11 die Verhältnisse bei Hinzunahme der Randbereiche der aktiven Empfangsapertur,
Fig. 12 ein Datenfeld in der i-n-Ebene für die Meßwerte (Parallelscan),
Fig. 13 ein Datenfeld in der i-n-Ebene für die gemittelten Meßwerte (Parallelscan),
Fig. 14 ein Blockschaltbild eines Ultraschall-B-Bildgeräts mit adaptiver Antenne,
Fig. 15 ein Diagramm zur Veranschaulichung der Korrektur der Laufzeitverzerrung in der Störschicht,
Fig. 16 eine Veranschaulichung der Wirkung der Größe der aktiven Apertur,
Fig. 17 eine Darstellung der Übernahme der Korrekturwerte bei einem Mitlauffokussierungssytem,
Fig. 18 eine besonders einfache Ausgestaltung der in Fig. 14 einsetzbaren Meßwertermittlung mittels Bildung einer Ausgleichsgeraden,
Fig. 19 eine Ausgestaltung der Meßwertermittlung nach Fig. 18 unter Einschluß einer Mittelung,
Fig. 20 eine alternative Ausgestaltung der Meßwertermittlung mittels Hochpaßfilterung,
Fig. 21 einen Ausschnitt eines Blockschaltbildes unter Anwendung einer Korrelation mit dem Summensignal,
Fig. 22 die geometrischen Verhältnisse beim Sektorscan,
Fig. 23 das Datenfeld beim Sektorscan und
Fig. 24 gemittelte Meßwertkurven beim Sektorscan.

### 5. Beschreibung von Ausführungsbeispielen

### 5.1 Prinzip der Messung der Störungen in der Adaptionsphase

### 5.1.1 Erklärung anhand von Modellen mit einem Punktreflektor

Aufgrund veröffentlichter Untersuchungen ist die heute gültige Vorstellung über die Ursache des obengenannten Effekts des Bildqualitätsverlusts im Gewebe die folgende: Hauptsächlich die im Körper vorliegende Ortsabhängigkeit der Phasengeschwindigkeit (weniger die Dämpfungsinhomogenität) verursacht durch Brechung drei störende Effekte:
a) Schallstrahlschwenk,
b) Schallstrahlverbreiterung und
c) Symmetrieverlust des Schallstrahlprofils.

Die obige Reihenfolge dürfte auch die Rangfolge der Bedeutung der Effekte wiedergeben. Wegen der sehr niedrigen Schallgeschwindigkeit von Fettgewebe gegenüber Organparenchym und Muskel wird die hauptsächliche Ursache für den Bildqualitätsverlust in der Inhomogenität des Unterhaut-Fettgewebes oder "Bauchspecks" vermutet. Die Leber ist dagegen vergleichsweise homogen in ihrer Geschwindigkeitsverteilung.

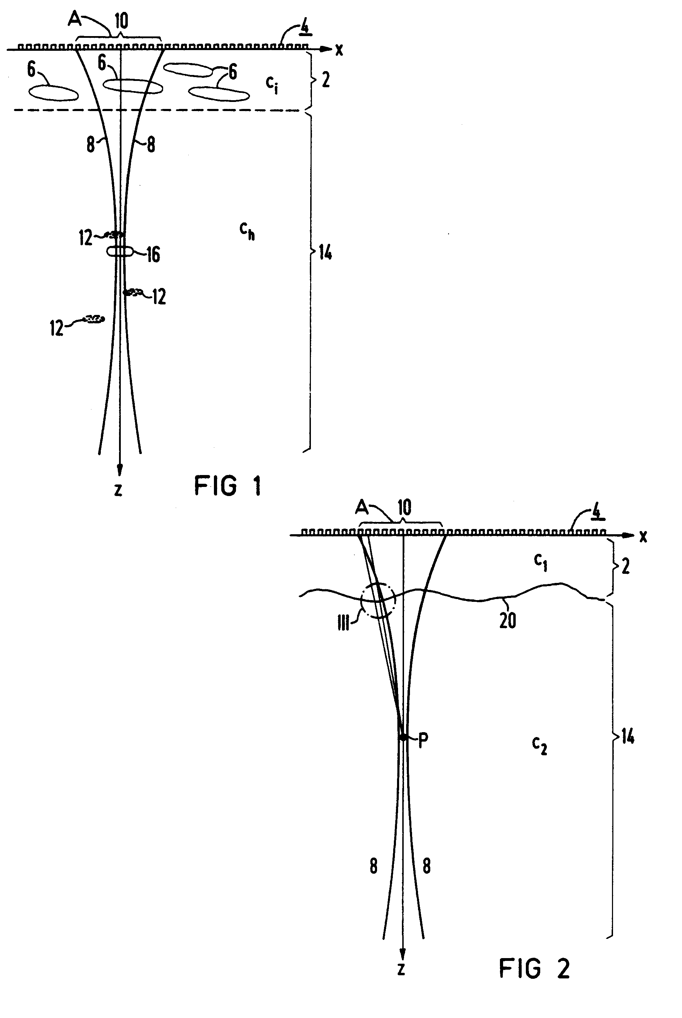

Um die Aufgabe der Kompensation der obengenannten Störeffekte nicht über Gebühr zu komplizieren, wird zunächst der Fall einer wandlernahen, bezüglich der Schallgeschwindigkeit inhomogenen Störschicht 2 betrachtet. Diese Situation ist in Fig. 1 dargestellt. Die Störschicht 2 ist also bei der Untersuchung einem linearen Ultraschall-Array 4 mit z. B. 128 Ultraschall-Wandlerelementen unmittelbar vorgelagert. Die Scan-Richtung ist mit x und die B-Scan-Zeile (Zentralstrahl) ist mit z bezeichnet. Die Störschicht 2 (Schallgeschwindigkeit c_{;}) enthält eine Anzahl von Fetteinlagerungen 6. Dort sind außerdem die Schallstrahlberandungen 8 (z. B. -6dB-Werte) des von der aktiven Apertur 10 emittierten Ultraschallbündels sowie statistisch verteilte Streukörper oder "Punktwolken" 12 als echogebende Streuzentren in dem anschließenden homogenen Medium 14 (Schallgeschwindigkeit _{Ch}) dargestellt. Die Punktwolken 12 entsprechen der derzeit gültigen Modellvorstellung für körperinterne Reflektoren und enthalten eine größere Zahl (z. B. 30 bis 100) von punktförmigen Streupartikeln im Volumen einer Auflösungszelle 16 üblicher B-Scanner. Diese Zelle 16 ist typischerweise ein Ellipsoid mit den Abmessungen in Längsrichtung z = 0,7 mm, im Querrichtung x = 3 mm und in Schichtrichtung y = 5 mm für die -6dB-Konturen.

Um das Modell für den Anfang noch übersichtlicher zu gestalten, ist in Fig. 2 die inhomogene Störschicht 2 durch eine Platte ungleicher Dicke und gegenüber mit darunterliegenden Medium 14 unterschiedlicher, aber einheitlicher (ortsinvarianter) Schallgeschwindigkeit c1 (≠ c2) dargestellt. Weiterhin wird zunächst anstelle einer Punktwolke 12 nur ein auf dem Zentralstrahl z liegender, echogebender Objektpunkt P angenommen. Im Gegensatz zur bekannten Literatur ist nicht vorausgesetzt, daß ein oder zwei amplitudenmäßig herausragende Punktreflektoren in der Objektebene vorhanden sind. Ein solcher "Normreflektor" ist im menschlichen Körper nicht vorhanden. Die Betrachtung eines einzelnen Punktes P hat hier nur didaktische Gründe.

Ebenfalls aus didaktischen Gründen sei zunächst die an der Grenzschicht 20 zwischen den beiden Medien 2, 14 unterschiedlicher Schallgeschwindigkeit c1, c2 auftretende Brechung (bis zu Punkt 7 dieser Schrift) vernachlässigt. Von der aktiven Apertur 10 in Fig. 2 werden fokussierte Ultraschall-Pulse ausgesandt, die in den angedeuteten seitlichen Grenzen 8 des Schallstrahls in das Untersuchungsmedium 2, 14 laufen und den punktförmigen Reflektor- oder Streukörper P "beleuchten". In Fig. 2 sind die Laufwege angedeutet, auf denen die vom Objektpunkt P gestreute Welle die ersten zwei Elementarwandler der aktiven Empfangsapertur 10 auf dem Sende-oder Empfangsarray 4 erreichen.

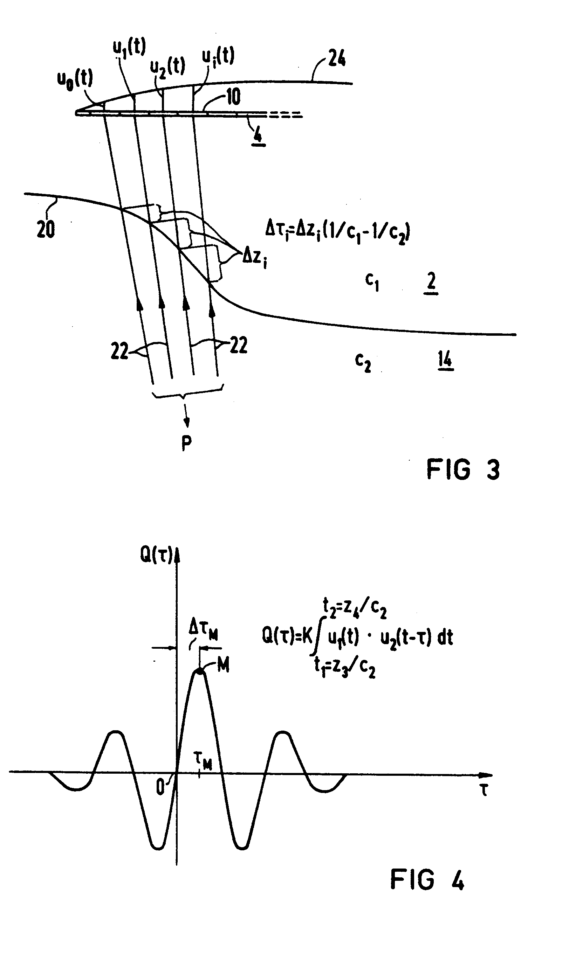

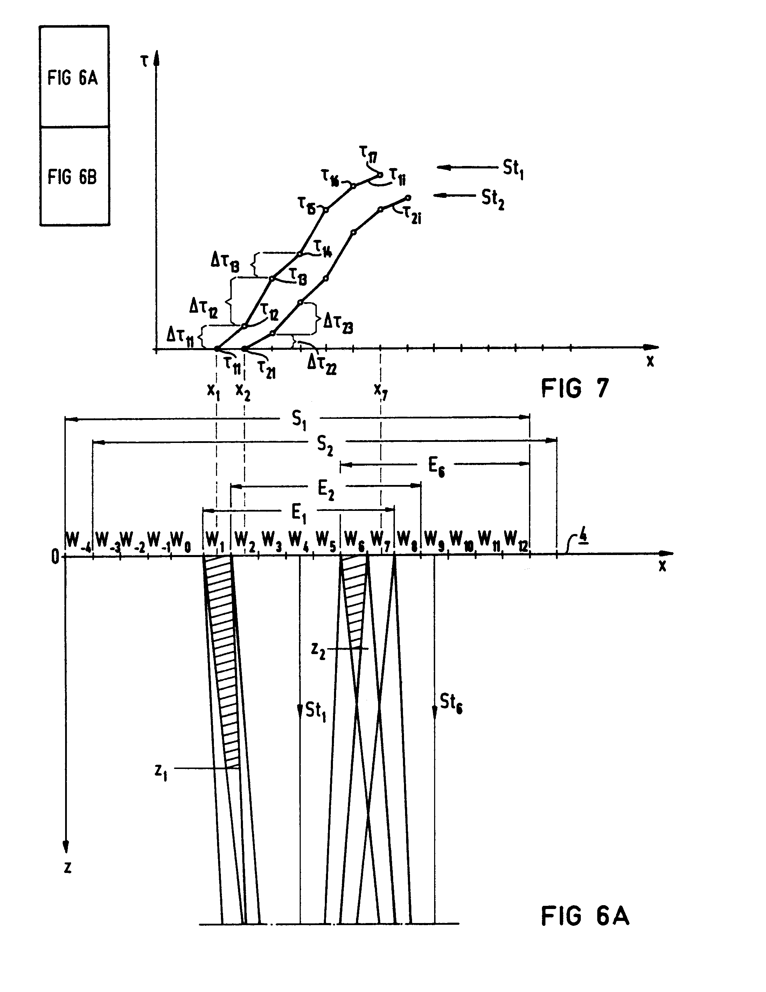

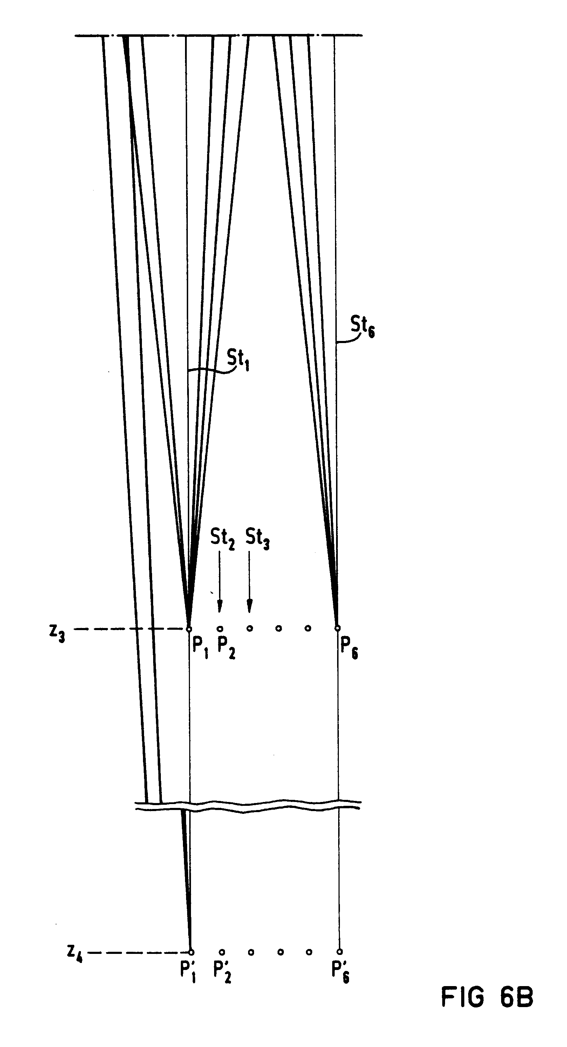

Der Ausschnitt III mit dem Durchtritt dieser Empfangswege 22 durch die Grenzschicht 20 zwischen den Medien 14 und 2 ist in Fig. 3 vergrößert gezeigt. Man erkennt, daß den Laufwegsdifferenzen Δzᵢ Laufzeitdifferenzen Δτᵢ gegenüber einem standardisiert-fokussierten Empfang (auf Kreissegment 24 um Punkt P) entsprechen. Das Kreissegment 24 entspricht dabei einer durch Krümmung (elektrische Verzögerung) fokussierten Wandlerkalotte. Die Zeitdifferenzen Δτᵢ führen zu einer zum Teil destruktiven Interferenz der Echo- oder Empfangs- signale der einzelnen Wandler des Arrays 4 bei der (auch hier durchgeführten (bekannten)) Summenbildung. Auf diese Weise entstehen störende Artefakte bei der Bilddarstellung. Mit anderen Worten: Das Ultraschall-B-Bildgerät ist so eingestellt, daß sich ohne die Zeitdifferenzen Δτᵢ die einzelnen Echosignale uᵢ(t) ohne destruktive Interferenzen addieren würden. Die Zeitdifferenzen Δτᵢ können nach Fig. 4 aus der Kreuzkorrelationsfunktion Q(_{T}) der "fokussiert empfangenen" Echosignale uᵢ(t) von insbesondere unmittelbar benachbarten Elementarwandlern bestimmt werden. Abweichend davon ist es auch möglich, jeweils Gruppen aus benachbarten Elementarwandlern, z. B. durch direkte Parallelschaltung oder durch Zusammenfassung verzögerter Echosignale, zu bilden und die Signale je zweier benachbarter Gruppen zu korrelieren. Unter dem Begriff "fokussiert empfangene Signale" sind die einzelnen Zeitsignale uᵢ(t) zu verstehen, die von den Elementarwandlern des Arrays abgenommen und - unter der Annahme einer ortsinvarianten Schallgeschwindigkeit c2 im ganzen Untersuchungsraum - so verzögert worden sind, daß dies - nach elektrischer Summenbildung - dem Empfang auf einer z. B. Zylinder- oder kugelförmig gekrümmten Wandleroberfläche 24 gleichkommt. Der Zylinder- oder Kugelmittelpunkt liegt am Ort von P. Ohne Geschwindigkeitsirritation, d. h. bei homogener Schallgeschwindigkeitsverteilung, liegt das (positive) Maximum M der Korrelationsfunktion Q(_{T}) bei der Zeitverschiebung Δτ_{M} = 0, weil theoretisch gleiche Signalformen von beiden Wandlern empfangen werden. Die Lage _{TM} dieses Maximums M (nicht der Minima) auf der TAU-Achse τ ist daher ein Maß für Δτ. Der mathematische Integralausdruck für die Korrelationsfunktion Q(_{T}) ist in Fig. 4 ebenfalls angegeben. u₁(t), u₂(t) sind die fokussiert empfangenen Echosignale zweier benachbarter Elementarwandler, und τ ist der Verschiebeparameter. Q(_{T}) entspricht der "Kreuzleistung" bei variierender gegenseitiger Verschiebung τ der beiden Signale u₁, u2. Die Integrationsgrenzen t₁, t₂ergeben sich aus den Tiefenbereichsgrenzen z3 und z4 und der Schallgeschwindigkeit c2 im Medium 14. Die Wahl dieser Grenzen t₁, t₂ wird weiter unten anhand von Fig. 6 erklärt. Der Faktor K kann unbestimmt bleiben, weil nur die Lage des Maximums M, nicht dessen absolute Höhe zu bestimmen ist. Fig. 4 zeigt einen typischen Verlauf Q(τ). Der Punkt M entspricht somit dem Maximum der Kreuzleistung. Um M und damit τ_{M} zu bestimmten, ist es nur erforderlich, τ im Integralausdruck Q(_{T}) solange zu variieren, bis das Maximum der Kreusleitung vorliegt.

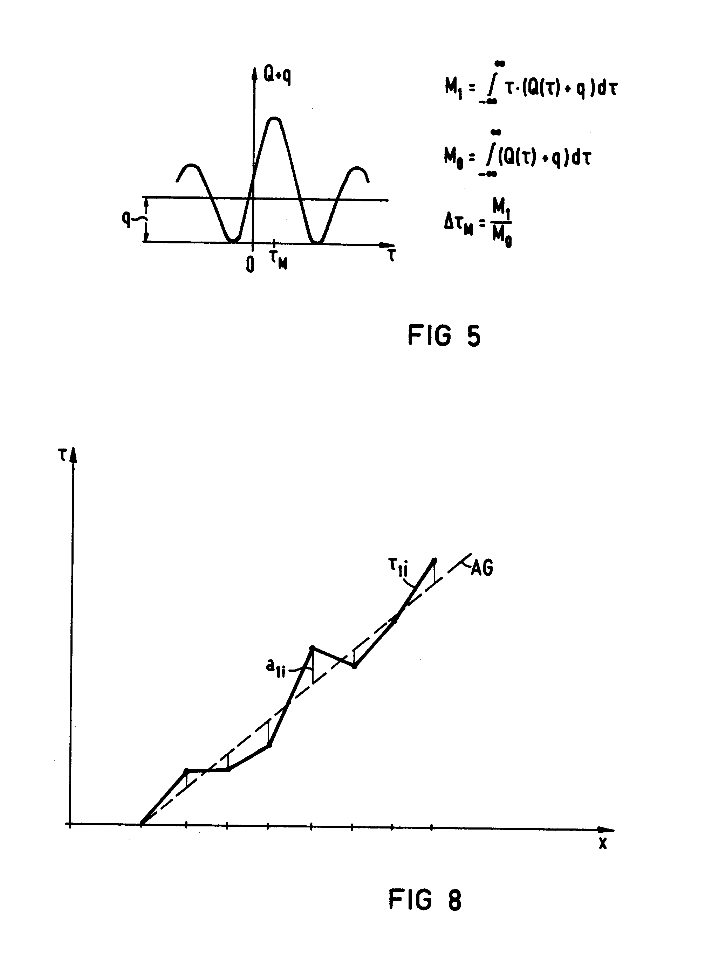

Anstelle der Lage des Maximums M, die z. B. auch aus der Bestimmung des Nulldurchgangs der Ableitung der Funktion Q(_{T}) gefunden werden kann, kann auch die Lage der Schwerpunktslinie durch die Korrelationsfunktion Q gewählt werden. Diese ergibt sich als Quotient M1/MO von erstem und nulltem Moment M1 bzw. MO der um den Betrag q zu positiven Werten hin verschobenen Korrelationskurve Q(_{T}) nach den Gleichungen der Fig. 5. Die Konstante q wird so gewählt, daß negative Funktionswerte von (Q(τ) + q) sicher vermieden werden, so daß der Nenner von M1/MO nicht Null werden kann. Diese Berechnung wird mit einem Rechner durchgeführt.

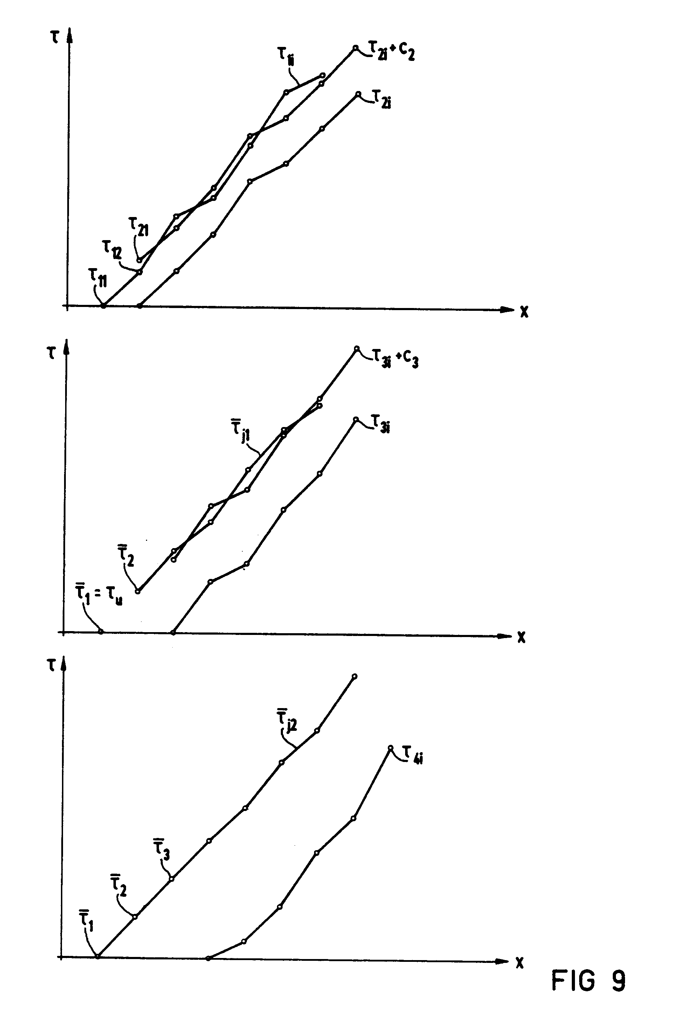

Durch Aufaddition aller benachbarten Δτ_{M} längs der Abtastrichtung x, siehe Fig. 7, kann die über der Apertur 10 wirksame Laufzeitverzerrungskurve τ(x) mit Stützstellen X₁, _{X2}, ... im Abstand der Arrayteilung, z. B. von 1,5 mm, gewonnen werden. Dies Vorgehen entspricht einer numerischen Integration, so daß noch eine Integrationskonstante zu bestimmen bleibt. Wie dies geschehen kann und welche Bedeutung diese Konstante hat, wird weiter unten erläutert.

### 5.1.2 Modell mit "Punktreflektorwolken"; Mittelungsmöglichkeiten

Wenn nun anstelle des Punktreflektors P (siehe Fig. 2) eine Punktwolke 12 (siehe Fig. 1) angenommen wird, muß man mit unterschiedlichen Signalformen von benachbarten Elementar-Wandlern rechnen (Bragg'sche Streuung). Laufzeitunterschiede auf den nicht mehr überlappenden Rückwegen der Echos wirken in demselben Sinne. Auch können die Punktwolken 12 vom Ultraschallbündel 8-8 nur gestreift werden, d. h. mit ihrem Schwerpunkt nicht im Zentralstrahl z liegen. Das Maximum M der Korrelationsfunktion Q(_{T}) gibt dann nicht mehr ungestört die Zeitverschiebung Δτ_{M} an. Bei Echos aus dem Gewebe bleibt aber - soweit bekannt - eine deutliche Korrelation erhalten. Es wird nun angenommen, daß bei der Mittelung über viele Signale von vielen Punktwolken 12 sich die aufgrund der Bragg'schen Streuung statistisch variierenden Maximumverschiebungen Δτ_{M} herausheben und die durch die Irritation (= inhomogene Geschwindigkeitsverteilung) hervorgerufene Verschiebung Δτ somit noch hinreichend genau gemessen werden kann. Je stärker gemittelt wird, desto mehr werden sichere Meßwerte erwartet. Simulationsergebnisse bestätigen diese Annahme.

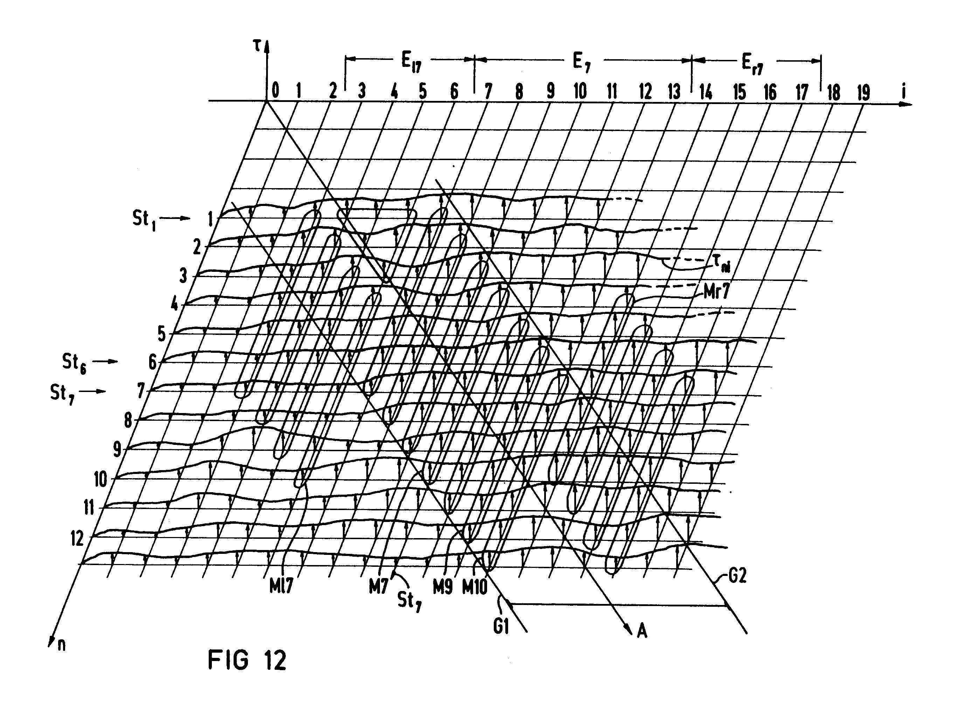

Folgende Möglichkeiten der Mittelung bestehen, wobei diese Methoden auch nebeneinander angewendet werden können:
a) Die HF-Echosignale _{U1} (t) nicht nur einer Auflösungszelle 16, sondern eines möglichst großen Tiefenbereichs von z. B. z3 = 5 cm bis z4 = 10 cm werden zur Korrelation herangezogen (siehe Fig. 6). In einer menschlichen Leber sind auf dieser Strecke z3 bis z4 ca. 10 bis 30 größere Echokomplexe zu erwarten. Bei Betrachtung eines solchen Tiefenbereichs z3 bis z4 ist sicherzustellen, das die Wege zu Punkten P₁, P₂, ..., P₆ und P1, P2, ..., Ps an den Tiefenbereichsgrenzen z3 bzw. 24 im Bereich der Störschicht 2 nicht zu unterschiedlich verlaufen. Anhand von Fig. 6 können die genannten Wegunterschiede im Bereich der Störschicht 2 im Fall des Parallelscan aufgezeigt werden. Die wirksame Sendeapertur der Elementarwandler Wp ist fortlaufend mit S1, S2, ..., ihre Empfangsapertur ist fortlaufend mit E1, E2, ... E6 bezeichnet. Die Schwerelinien der Sendestrahlen sind fortlaufend mit St1, St2, ... St6 gekennzeichnet. In Fig. 6 ist ein Objektbereich mit den Grenzen z3 und z4 und den Streuzentren P₁, P₂, ... P₆; P1, P2, ... Ps etwa in Maßstab 1:4 dargestellt. Die Elementarwandler Wp (z. B. p = 1 bis 128) haben z. B. 1,5 mm Breite, entsprechend ca. 3 Wellenlängen bei 3 MHz. Die Punkte Pn liegen in z3 = 5 cm und die Punkte Pn' in z4 = 10 cm Tiefe. Man sieht die Bereiche, in denen die Kugel- oder Zylinderwelle vom Streupunkt Pn zu den Elementarwandlern Wi läuft. Bei Betrachtung der Punkte P1 und P1' verlagert sich der Rücklaufweg zum Wandler W1 wandlernah bis zur Tiefe z1 = 1 cm tolerabel wenig; es ergibt sich eine etwa halbe Überdeckung am unteren Rand bei z1 im ungünstigsten Fall. Im Bereich z = 0 bis z = z1 wird also ein übereinstimmender Laufweg angenommen. Wenn die wirksame Empfangsapertur E nicht breiter als E1 und die Störschicht 2 nicht dicker als 1 cm ist, können also Signale aus dem Tiefenbereich z3 = 5 cm bis z4 = 10 cm bezüglich der sieben Elementarwandler W1 bis W7 zur Korrelation herangezogen werden. (Der Fall breiterer Empfangsaperturen E wird weiter unten besprochen.)
b) Eine (weitere) Störunterdrückung kann auch dadurch erreicht werden, daß die Meßwerte von mehreren benachbarten Abtastzeilen gemittelt werden (siehe Fig. 6). Auch dabei ist auf die obengenannten Wegunterschiede zu achten. Außerdem ist Voraussetzung, daß die für den Fall homogener Geschwindigkeitsverteilung ausgelegte Fokussierung über den ganzen Tiefenbereich hinweg gut arbeitet. Dies kann u. U. mit einer Mitlauffokussierung oder einer Axikonfokussierung (d. h. durch geometrische oder elektronische Simulation einer dachförmigen Apertur) erreicht werden.
   Ebenso tolerabel lang wie im Fall a) bleibt der gemeinsame Rücklaufweg von allen Punkten P₁ bis P₆ und P1 bis Ps, die im Signaleinzugsgebiet gelegen sind, unmittelbar vor den Elementarwandlern Wp, und zwar bis zur Tiefe z2 = 0,5 cm. Nimmt man ein Vollschrittverfahren der Abtastung (mit im Beispiel 1,5 mm Schrittweite, was der Breite eines Wandlerelements entspricht) an, dann können in diesem Fall die Meßwerte von sechs benachbarten Abtastzeilen gemittelt werden. Für eine 1 cm Störschicht 2 sind noch drei oder vier Zeilen zulässig. Sollten die Schwankungen der Meßwerte zwischen den Punkten P₁ bis P₆ groß und sollte daher eine stärkere Mittelung gewünscht sein, so ließe sich das bekannte Halbschrittverfahren (abwechselnde Aktivierung einer geraden und einer ungeraden Zahl aktiver Elementarwandler) anwenden und dadurch die Zahl der zulässigen Zeilen verdoppeln. Die üblichen Dicken der Störschichten 2 von 1 bis 2 cm können also in der Praxis mit Mittelung über ein nicht zu kleines Gebiet erfaßt werden.
c) Eine weitere Möglichkeit, zu mehr voneinander unabhängigen Daten zu kommen, besteht darin, über einen längeren Zeitraum (z. B. einen Herzschlag oder eine Atemperiode) zu messen und diese Daten zu mitteln. Dann werden Unterschiede der Echosignale erfaßt, die durch körperinterne Bewegungsvorgänge entstehen. Man nutzt dann die sonst als Speckle-Artefakte auftretende Information aus. Unter Mittelung ist zu verstehen, daß die Meßkurven z. B. von Fig. 12, so wie weiter unten beschrieben, nicht nur einmal, sondern mehrmals hergestellt und in bekannter Weise gemittelt werden.
d) In Ergänzung zu Punkt c) kann auch ein bewußtes leichtes Verkippen des Arrays 4 benutzt werden, um zu unabhängigen Daten zu kommen. Unter dem Ausdruck "Kippen des Arrays 4" ist eine kleine Verdrehung der Schnitt-oder Abtastebene (z. B. um 1 bis 20) um die Array-Längsachse (Ankoppelfläche) oder Abtastachse x zu verstehen, so daß die Laufwege in der Störschicht 2 nur geringfügig voneinander abweichen. Man kann daran denken, das Verkippen der Abtastebene automatisch, und zwar elektronisch oder mechanisch, bei der Messung vorzunehmen. Die elektronische Lösung setzt allerdings ein Mehrzeilen-Array voraus.

Je mehr nach den obengenannten Methoden a) bis d) gemittelt wird und je kleiner zum Ausgleich das Dateneinzugsfeld (P₁, ... P₆; P1, ... Ps nach Fig. 6) bei konstantem Mittelungsgrad oder unveränderter Störbefreiung gemacht werden kann, desto tiefer reicht die Korrektur ins Gewebe (z1, z2).

### 5.1.3 Aufaddition der Meßwerte

In Fig. 7 ist die zu Fig. 6 gehörige Aufaddition der Meßwerte Δτᵢ gezeigt. Die Korrelation der Signale der Elementarwandler W1 und W2 ergibt nach Aussendung des ersten Sendestrahls St1 den Meßwert Δτ11, der willkürlich von Null her an der Stelle x2 des Wandlers W2 aufgetragen ist und zum Punkt _{T}12 führt. Der nächste Meßwert Δτ12 ergibt sich aus den Empfangssignalen der Wandler W2 und W3 und wird an der Stelle von W3, und zwar beginnend in der Höhe von ₁12, aufgetragen. In der praktischen Realisation wird er aufaddiert und im Rechner gespeichert. Dies führt zum Punkt τ13. So wird weiter verfahren bis zum Kurvenpunkt ₁17. Anschließend wird der Sendeort (Schwerelinie des Sendestrahls St) um einen Schritt (ein Element) nach rechts verlegt, d. h. von St1 nach St2, und erneut gemessen. Die Meßwerte Δτ22, Δτ23 ... Δτ28 werden entsprechend aufaddiert und ergeben eine um einen Schritt seitwärts versetzte Kurve τ2i mit gleicher Anzahl von Stützstellen τ21 bis τ27. Dies Vorgehen wird über die ganze Abtastlänge des Arrays 4 fortgesetzt. Man erhält also eine Anzahl Kurven τ1i, τ2i, τ3i,... τpi (τni).

Die Aufaddition birgt die Gefahr, daß einzelne Meßfehler sich nicht nur lokal äußern, sondern über die jeweilige Kurve τ1i, τ2i, ... "geschleppt" werden. Es ist daher zweckmäßig, Meßwerte, die größer als ein physiologisch vorkommender Wert für das Inkrement Δτ pro Arrayteilung Wi sind, auf den Maximalwert zu begrenzen oder unter Umständen ganz herauszunehmen.

### 5.1.4 Weiterverarbeitung durch Bildung einer Ausgleichsgeraden

In Fig. 8 ist als Beispiel noch einmal ein schematischer Verlauf der Kurve τ1i(x) gezeigt. Durch diesen Verlauf wird eine Ausgleichsgerade AG gelegt. Für die weitere Verarbeitung interessiert jetzt nur der jeweilige Zeitabstand a₁ᵢ zwischen der Kurve τ1i(x) und der Ausgleichsgeraden AG. Die einzelnen Zeitabstände a₁ᵢ werden gespeichert und zu Korrekturwerten umgerechnet, wie später näher unter Punkt 5.2.2 ("Kompensation und Adaption") geschildert wird. Bedeutsam an diesem Weiterverarbeitungsverfahren ist seine Einfachheit; ein Bezug zu den benachbarten Kurvenverläufen τ2i, τ3i ... wird nicht hergestellt.

### 5.1.5 Alternative Weiterverarbeitung: Aligning und Mittelung

Statt des in Punkt 5.1.4 geschilderten Verfahrens kann auch ein anderes Verfahren benutzt werden. Die nach Punkt 5.1.3 aufaddierten Werte Δτ sollen zunächst nur die Mittelung über Echosignale aus unterschiedlicher Tiefenlage z3 bis z4 einer Abtastzeile St1, St2, ... enthalten. Es fehlt also noch eine Mittelung über benachbarte Abtastzeilen gemäß obigem Punkt b). (Außerdem sind die Kurven untereinander noch in Beziehung zu setzen.) Man kann nun diese weitere Mittelung nach Punkt b) entweder vor der Aufaddition der Δτ oder danach vornehmen. Hier wird zunächst die letztere Möglichkeit besprochen, weil sie die universellere ist.

Die Kurven τ1i, τ2i, ... (allgemein: τni) enthalten zum Teil Meßwerte über praktisch gleiche Laufstrecken im Unterhaut-Fettgewebe, so daß über einander zugehörige Werte gemittelt werden kann. Fig. 9 zeigt die Art der Mittelung der Meßwerte über mehrere Abtastzeilen: Die aufaddierten, d. h. numerisch aufintegrierten Kurven τni sind wegen der unbekannten Integrationskonstanten (siehe z. B. Konstante K in Fig. 4) gegeneinander noch willkürlich verschoben. Vor der Mittelwertbildung müssen sie zumindest untereinander noch in Beziehung zueinander gebracht werden. Die Kenntnis des absoluten Wertes der Integrationskonstanten ist für die Mittelung nicht notwendig.

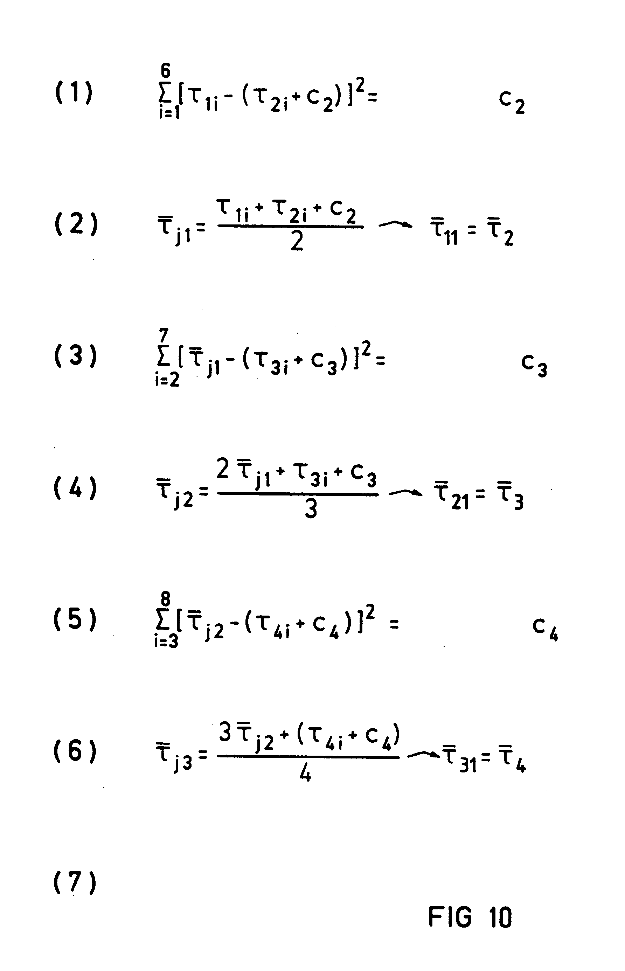

Hier kann man folgendermaßen vorgehen: Wie in Fig. 7 gezeigt, repräsentieren die Kurven τni gestörte Meßwerte für jeden Elementarwandler Wi. Wären die Meßwerte ungestört, könnte man die Kurven τni durch Verschiebung in τ-Richtung (Addition unterschiedlicher Konstanten) zur Deckung bringen. Die echten Meßkurven werden daher nach der "Methode der kleinsten Fehlerquadrate" zunächst überlagert oder zur Deckung gebracht. Dies wird hier als "In-Deckung-Bringen" oder "Aligning" bezeichnet. Die graphische Darstellung dazu findet sich in Fig. 9; die mathematischen Gleichungen (1) bis (6) für das "Aligning" und die Mittelwertbildung sind in Fig. 10 zusammengestellt.

Man beginnt mit einer beliebigen Einzelkurve τni in beliebiger Verschiebung, z. B. mit T1 i in der gezeichneten Lage, bei der τ11 = 0 ist. Der Index n bezeichnet die Nummer der Senderichtung Stₙ. Die Nachbarkurve τ2i wird durch Addition einer Konstanten C2 über die Kurve T1 i geschoben. Der Wert der Konstanten C2 ergibt sich nach Gleichung (1) aus dem Minimum Min der Summe der quadratischen Differenzen. Von den beiden nun übereinandergelegten ("aligned") Kurven τ1i, τ2i kann die erste Mittelwertkurve rj1 nach Gleichung (2) gebildet werden, vergleiche Fig. 9, mittleres Diagramm. Diese enthält als linken Randwert den zweiten Wert _{T}2 der endgültig gemittelten Ergebniskurve. Der erste Wert τ̅1̅ ist identisch mit dem linken Randwert τ11 der ersten, ungemittelten Meßkurve τ1i. _{T}2 ist der Mittelwert von nur zwei Meßwerten. _{T}3 (siehe unteres Diagramm von Fig. 9) ist entsprechend der Mittelwert von drei Meßwerten, usw.. Maximal werden im vorliegenden Beispiel sieben Werte gemittelt, so daß ab τ7 (nicht gezeigt) voll gemittelte Werte vorliegen. Zu _{T}3 kommt man durch das "Aligning" von _{T}3i (mittleres Diagramm) mit der ersten Mittelwertkurve τ̅j̅1̅ (mittleres Diagramm) gemäß Gleichung (3) und Mittelung nach Gleichung (4). Bis zu _{T}4 sind die Gleichungen in Fig. 10 angeschrieben. Damit ist das Bildungsgesetz für die weiteren Kurvenpunkte eindeutig beschrieben. Wenn aus diese Weise eine Kurve für alle Orte der Elementarwandler W1, W2 ... vorliegt, wird eine Korrektur der Fokussierung vorgenommen. Dies wird weiter unten besprochen.

### 5.1.6 Weitere alternative Weiterverarbeitung: Hochpaßfilterung

Statt der unter Punkt 5.1.5 und 5.1.6 beschriebenen Verfahren kann bei der Weiterverarbeitung auch eine Hochpaßfilterung im Ortsbereich x (siehe Fig. 7) durchgeführt werden. Die gefilterten Werte von verschiedenen Kurven, die zu den einzelnen Sendeorten Stn gehören, werden dann anschließend gemittelt. Die gemittelten Werte werden abgespeichert und zu Korrekturwerten für die Fokussierung im Empfangs- und/oder Sendefall umgerechnet.

### 5.1.7 Breitere Empfangsaperturen

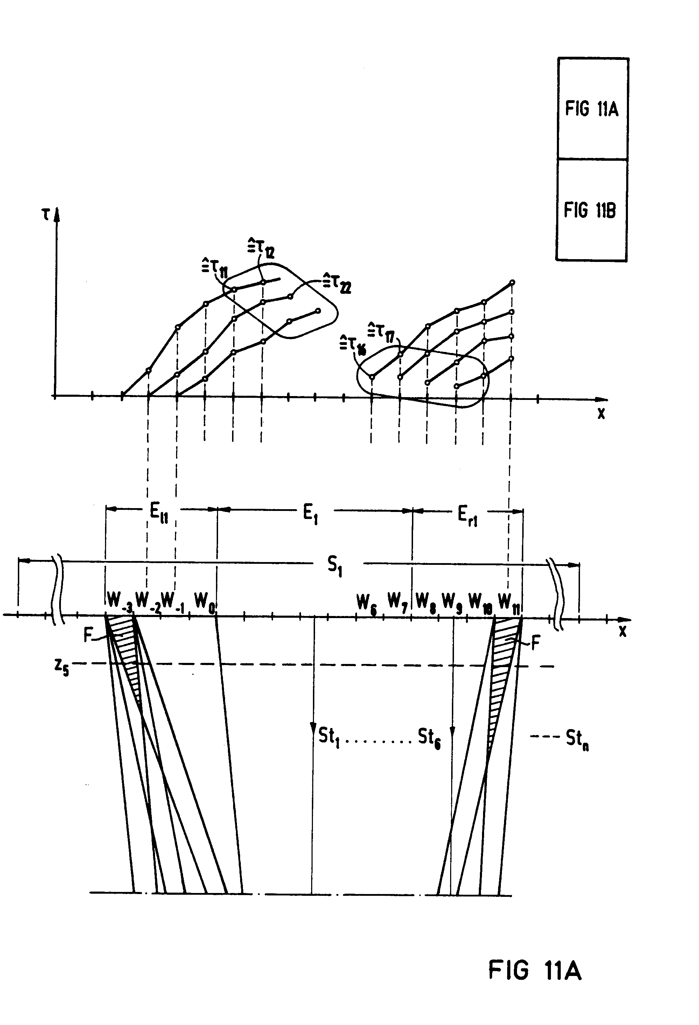

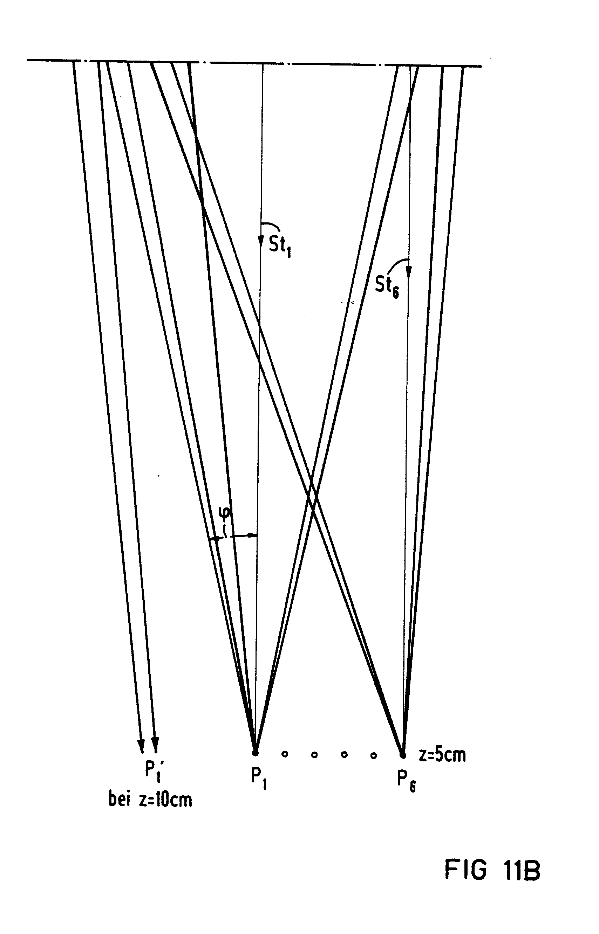

Das Verfahren soll, wie eingangs gesagt, gerade bei großen Aperturen angewendet werden. Die Korrekturmöglichkeit betrifft aber bisher nur relativ kleine Empfangsaperturen von im Beispiel 7 Elementarwandlern W1, ... W7 entsprechend 21 Wellenlängen oder 10,5 mm. Wenn größere Aperturen als E1 (Fig. 6), d. h. Aperturen einschließlich E11 und Er1 betrachtet werden, liegen die auszumessenden Laufwege, wie Fig. 11 zeigt, nicht mehr annähernd senkrecht unter dem Array, wie in Fig. 7, sondern schräg, mit einem Winkel φ zur z-Richtung. Man kann in diesen Bereichen also nicht mit den bisher ermittelten Werten arbeiten, weil sie für den etwa senkrechten Fall gelten.

Hier wird daher so vorgegangen, daß die Werte _{T}ni in den linken und rechten Randbereichen E1n bzw. Ern und u. U. in darüber hinausgehenden weiteren Bereichen in der bisher beschriebenen Weise einschließlich Aufaddition mit aufgenommen werden. Dies ist in Fig. 11 oben veranschaulicht. Auf diese Weise sind die Meßwerte bezüglich eines Sendeorts St1, St2, ... Stn für die ganze Empfangsapertur in Deckung gebracht ("aligned"). Man nutzt dabei die Erwartung auf einen stetigen Kurvenverlauf auch im Übergangsbereich zwischen den Teilaperturen E, Er, E1, usw.. Diese Werte für schrägen Schalleinfall müssen natürlich getrennt von den bisherigen gehalten werden und dürfen nur untereinander, d. h. für links und rechts getrennt, oder allgemein für jeden Winkelbereich φ gegen senkrechten Schalleinfall getrennt gemittelt werden. Außerdem müssen die Meßwertkurven für jede Sendestelle St1, ... Stn vor oder nach ihrer Mittelung bezüglich der Integrationskonstanten an die bereits (für die innere Apertur E1) vorhandenen angepaßt ("aligned") werden. Fig. 11 unten zeigt in Form der schraffierten Flächen F, bis zu welchen Decken z5 der Störschicht die Größe des gewählten Feldes zwischen P₁ ... P₆ und P1 ... Ps, aus dem Echosignale zur Mittelung herangezogen werden, noch brauchbare Messungen zuläßt. Dabei sind wieder die Extremwerte des Schalleinfalls von den Punkten P1 und P₆ gezeichnet und z5 in einer Tiefe gewählt, die einer Halbierung der Basis des Überlappungsdreiecks F entspricht.

Die Meßdatenerfassung führt auf ein ganzes Datenfeld, das in Fig. 12 räumlich dargestellt ist. Über der i-n-Ebene sind die aufsummierten Zeiten τni als kleine Pfeile zu sehen. Der Index i gibt die Platznummer des Elementarwandlers W1, W2, ..., n die Nummer der Senderichtung bzw. des Sendeortes (Schwerelinie des Sendefelds) an. Es ist der Fall einer aktiven Apertur inmitten eines langen linearen Arrays angenommen (Parallelscan). Speziell sind in Fig. 12 die Empfangsapertur E17, E7, Er7 sowie der Sendeort St7 hervorgehoben. Randeffekte durch die endliche Arraylänge sind nicht berücksichtigt. In der Ebene sind die Grenzlinien G1, G2 eingetragen, zwischen denen beim Scan in Scanrichtung A die angedeuteten horizontalen Kurven nach der bisher angegebenen Methode untereinander "aligned" werden, und es sind diejenigen Werte durch geschlossene Kurven Mn, z. B. M7, umrandet, die nach dem "Aligning" gemittelt werden. Daran soll sich auch bei Einbeziehung der Randaperturen nichts ändern. Geht man von der obengenannten Erwartung aus, daß die zu einem Sendeort Stn gehörenden, aufintegrierten Kurven τni stetig verlaufen müssen, dann sind die Randbereiche bereits mit dem zentralen Empfangsbereich "aligned". Zum "Aligning" mit den Kurven anderer Sendeorte ist es zweckmäßig, die Kurven in der Lage zu mitteln, in der sie durch das Übereinanderlegen der Werte für das Zentrum der Apertur ("Aligning" im senkrechten Empfangsfall) zu liegen kamen. Die zu mittelnden Werte sind wieder für eine Lage der Empfangsapertur durch Kurven Mn1 und Mnr, z. B. M71 und M7r, umrandet. Dabei ist darauf geachtet, daß nur solche Werte gemittelt werden, die zu einem festen Winkelbereich φ der Abweichung vom senkrechten Schalleinfall gehören. Damit werden die Ergebnisse unabhängig vom Abtastort verwendbar. Würde man z. B. den mit D bezeichneten Bereich mit zur Mittelung heranziehen, wäre dies im Beispiel für den Abtastort von St1, aber nicht von z. B. St6 tolerabel.

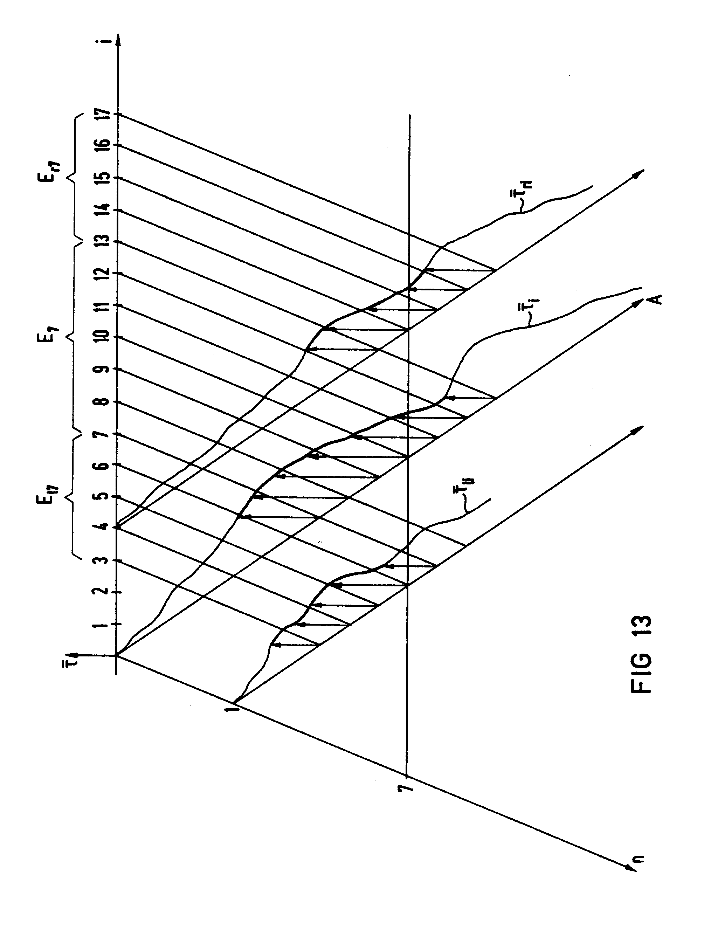

Das Ergebnis der Mittelung ist im i-n-₇-Diagramm in Fig. 13 zusammengestellt. Bei einem zentralen Empfangsbereich E7 der Apertur und einem linken und einem rechten Randbereich E17 bzw. Er7 erhält man drei Mittelungskurven _{T}i, 1Ii bzw. _{T}ri. Die dick gezeichneten Kurventeile gelten für die gezeichnete Lage der Empfangsapertur E17, E7, Er7. Sie wandern mit dem Scan A Schritt um Schritt diagonal nach rechts vorn. Die linken und rechten Kurvenenden sind wegen der endlichen Arraylänge weniger stark gemittelt und damit unsicherer als die (längeren) Mittenteile. Dies hat aber bei der Bilddarstellung nur eine Auswirkung auf die Bildränder. Wegen des "Aligning" nur aus dem Mittenbereich sind die Randbereichskurven ebenfalls unsicherer als die Kurven für die Aperturmitte.

Hiermit liegen Kurven über die Laufzeitverzerrung in der wandlernahen Störschicht vor, die zur Korrektur der Fokussierungsfehler herangezogen werden. Lediglich eine für alle Kurven gemeinsame Integrationskonstante ist unbekannt. Sie entspricht einer planparallelen Störschicht, deren Schallgeschwindigkeit c1 unbekannt ist. Da solche Effekte in der Praxis nur zu wenig störenden Fehlern der Bildgeometrie führen, erübrigt sich hier ein weiterer Meßschritt. Zur besseren Verständlichkeit kann zu allen Kurven eine gemeinsame Konstante G hinzugezählt werden, die negative Kurvenwerte an irgendeiner Stelle sicher vermeidet.

### 5.1.8 Alternative Meßvorschrift zu Punkt 5.1.7

Betrachtet man zunächst nur wieder den zentralen Empfangsbereich E7, dann liegt der Gedanke nahe, zur Vereinfachung der Rechenvorschrift die Δ₁ni, oder, was das gleiche ist, die differenzierten Kurven die Fig. 7 zu mitteln und anschließend erst aufzuintegrieren. Man gewinnt dann zwar nicht die Integrationskonstanten C2, C3, C4 nach Fig. 10, verliert damit aber keine wichtige Information, weil diese Konstanten nicht weiter verwendet werden.

Sollen aber die Empfangsränder Er, E1, usw. mitvermessen werden, sind die Integrationskonstanten C2, C3, C4, ... doch von Wichtigkeit, weil die aufintegrierten Kurven _{T}ni untereinander "aligned" sein müssen. Unphysilogische Sprünge könnten auftreten, wenn - je nach Integrationsbeginn - beliebige Integrationskonstanten gewählt werden können. Für die bereits gemittelten Kurven gibt es keine Randbedingung für den Übergang zwischen den Bereichen, weil es sich um eine neue Kategorie von Meßwertkurven für schrägen oder unterschiedlich schrägen Schalleinfall handelt. Es gibt nur die obengenannte Stetigkeitserwartung für die nocht nicht gemittelten, aber bereits aufintegrierten Kurven. Diese vereinfachte Rechenmöglichkeit ist also nur sehr beschränkt einsetzbar.

### 5.1.9 Korrelation mit Summenempfangssignal

Anstelle der Korrelation der Signale benachbarter Elementarwandler W1, W2, ... kann auch die Korrelation der Signale der Elementarwandler mit dem Summensignal von der fokussierten Empfangsapertur zur Messung der Laufzeitverzerrungskurve gebildet werden. Dies läßt allerdings weniger gute Meßwerte erwarten, weil die Verwandtschaft der Empfangssignale nicht so groß ist wie bei den Signalen benachbarter Elementarwandler.

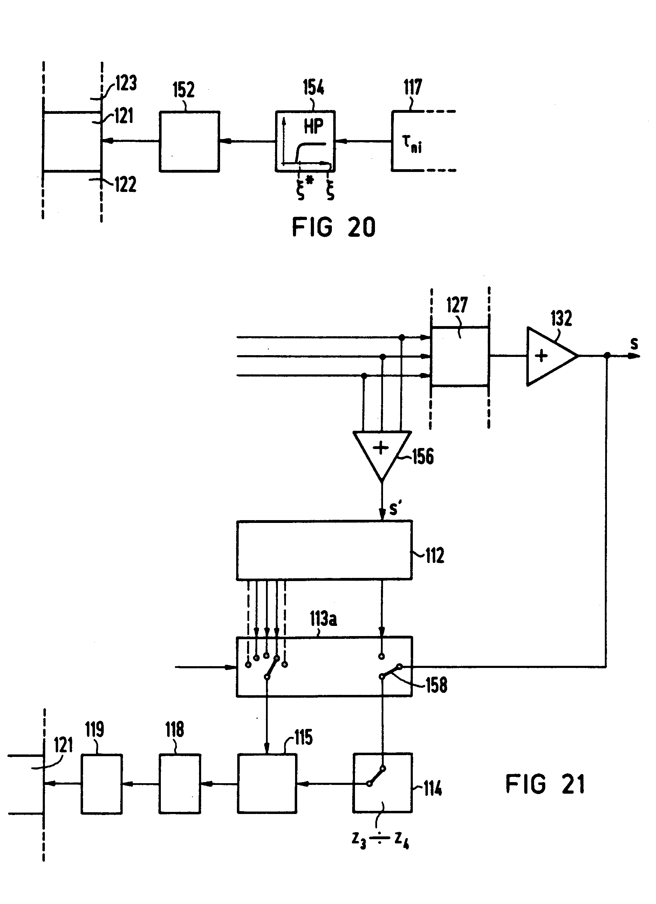

Bei dieser Methode erhält man ein Äquivalent zu den aufintegrierten Kurven z. B. der Fig. 12 direkt durch Messung. Die weitere Signalverarbeitung läuft wie später angegeben. Eine technische Anwendung ist in Fig. 21 gezeigt.

### 5.2 Technische Ausführungsformen der angegebenen Verfahren

### 5.2.1 Korrelation und Mittelung

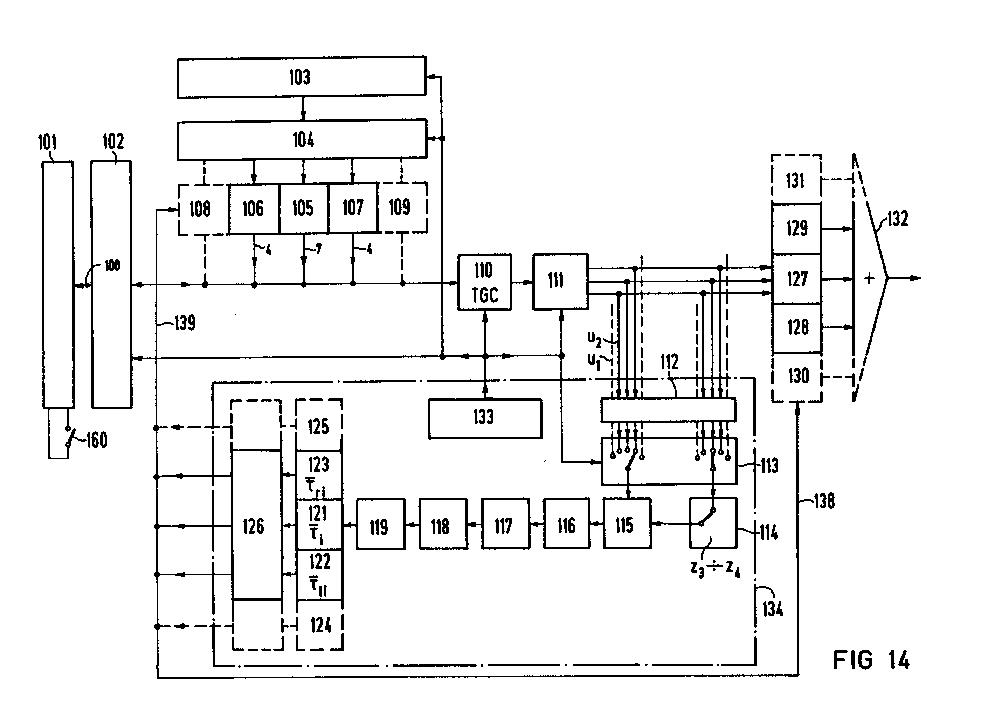

In Fig. 14 ist der Eingangsteil eines Ultraschall-Bildgabegeräts, speziell eines B-Scanners, gezeigt, das die beschriebene Meßmethode für die Geschwindigkeitsirritation im Bauchspeck oder Unterhaut-Fettgewebe zur Kompensation der dadurch hervorgerufenen Fokussierungsfehler vornimmt.

Mit 101 ist ein lineares Ultraschallarray, z. B. mit 100 Wandlerelementen W1, W2 ..., und mit 102 ist eine Einrichtung zur Scanfortschaltung oder zum Schwenk des emittierten Ultraschallstrahls bezeichnet. Das Array 101 wird durch die Einrichtung 102 im Sinne eines elektronischen Parallel- oder Sektorscans genutzt. Ein Sender 103 und eine Fokussierungseinrichtung 104 arbeiten nach konventioneller Technik so, als wäre das Übertragungsmedium homogen. Die eingezeichneten Korrekturblöcke 105 bis 109 zwischen den Einrichtungen 103 und 104 sind zunächst unwirksam.

Im Endstadium der Adaption oder Iteration werden bevorzugt alle Wandlerelemente W1, W2, ... zur aktiven Empfangsapertur A und Sendeapertur A herangezogen. Die Empfangssignale der aktiven Fläche des Arrays 101 werden von TGC-Verstärkern (symbolisiert durch Block 110) verstärkt und im Empfangsfokusverzögerern (symbolisiert durch einen Block 111) entsprechend dem bekannten Stand der Technik so verzögert, daß sich hinter einem Summierglied (Block 132) ein bei einem homogenen Übertragungsmedium gut fokussiertes Empfangssignal ergäbe. Die Empfangssignale von den Elementarwandlern W1, W2, ... können in einem Speicher (Block 112), u. U. zwischengespeichert werden; dann kann man mit der geringst möglichen Anzahl von Sendeschüssen auskommen und bei entsprechend schneller Signalverarbeitung in kürzest möglicher Zeit den Adaptionsprozeß ablaufen lassen. Ohne diesen Zwischenspeicher 112 müßte für jedes Signalpaar erneut gesendet werden. Der Speicher 112 ist hier hinter den Verzögerern 111 angeordnet. Dadurch werden die Erwartungswerte für die Lage des Maximums M der Korrelationsfunktion Q(_{T}) nach Fig. 4 für den homogenen Fall zu Null. Abweichend davon kann der Speicher 112 auch zwischen den Blöcken 110 und 111 die Empfangssignale abgreifen. Dann sind die Erwartungswerte ungleich Null.

In einer Meßwert-Auswahlschaltung 113 werden je zwei Signale, z. B. u1 und u2, benachbarter Elementarwandler vor dem Summierer (Block 132) ausgewählt; sie werden zur Verarbeitung im Sinne einer Korrelation in einen Korrelator 115 gegeben. Die Schaltung 113 schaltet zyklisch auf zwei neue Signale weiter, so daß im Zusammenspiel mit der Einrichtung 102 die ganze Arrayapertur abgetastet wird. Ein Tiefenbereich-Wähler 114 wählt den Tiefenbereich z3 bis z4 aus, aus dem die Echo- Signale korreliert werden sollen. In einem Block 116 wird für jedes Signalpaar (z. B. u1, u2 oder u2, u3) der Abstand ΔτM des Maximums M der Korrelationsfunktion vom Ursprung festgestellt, und in einem nachgeschalteten Addier- und Speicherblock 117 wird zu _{T}ni aufaddiert, so daß hier die Kurven _{T}ni in Form der Tabellen (siehe Fig. 12) des gespeicherten Stützstellenwerte entstehen. In einem Block 118 werden die Konstanten C2, C3, C4, ... nach den Gleichungen der Fig. 10 bestimmt, d. h. es wird ein zentrales "Aligning" durchgeführt. Ein Block 119 symbolisiert die nachfolgende Mittelwertbildung.

In einem nachgeschalteten Speicher (Block 121) sind die gesamten Funktionen _{T}i gemäß Fig. 13, in einem Speicherblock 122 die Werte _{T}ri und in einem Speicherblock 123 die Werte τli abgelegt. Mit zwei (gestrichelten) Blöcken 124 und 125 ist die Speicherung weiterer Daten angedeutet, die anfallen, wenn noch weitere, hier nicht mehr dargestellte Randbereiche der Empfangsapertur E17, E7, Er7 mitgemessen werden. Eine Auswahlschaltung (Block 126) trifft die Auswahl der Zeitverzögerungswerte, welche für die Korrektur (siehe Abschnitt 5.2.2) der gerade aktiven Wandler notwendig sind. Dies entspricht den dick gezeichneten Kurventeilen in Fig. 13.

Zwischen den Verzögerern 111 und dem Summierglied 132 sind Korrekturblöcke 127 bis 131 geschaltet. Zur Steuerung der einzelnen Funktionsabläufe ist eine Steuereinrichtung 133 vorgesehen. Der Ausgang des Summierglieds 132 führt in bekannter Weise zu einem Demodulator für das Bildsignal. Die eigentliche Korrektur der Zeitverzögerungswerte wird im Empfangsfall in den Korrekturblöcken 127 bis 131 und im Sendefall in den Korrekturblöcken 105 bis 109 durchgeführt. Diese werden vom Block 126 über Leitungen 138, 139 gesteuert.

Die Blöcke 112 bis 126 und der Block 133 können als Teile eines Digitalrechners 134 aufgefaßt werden, der die Steuerung (Block 133) und die vorher dargestellte Art der Verarbeitung der Meßwerte bis zur Bildung der Kurvenschar nach Fig. 13 vornimmt. Die dann notwendigen A/D-Wandler sind hier nicht dargestellt. Es ist auch unerheblich, ob die zur Messung der kleinen Δτ erforderliche, besonders feine Abtastung der Zeitsignale vom A/D-Wandler durch Überabtastung direkt geliefert wird, oder ob nach Minimalabtastung nach dem Shan- non'schen Theorem im Rechner 134 tiefpaßgefiltert und anschließend überabgetastet wird. Der Digitalrechner 134 kann entweder ein universeller programmierbarer Rechner sein (was eine preisgünstige Lösung darstellt), oder er kann aus speziellen digitalen Bauelementen aufgebaut sein (was zu einer schnellen Datenverarbeitung führt).

Anstelle der Korrelationsrechnung direkt im Zeitbereich im Korrelator 115 ist nach gängigem Wissen der Systemtheorie natürlich auch der Weg über den Fourierraum, d. h. eine Bestimmung des komplexen Kreuzleistungsspektrums und eine Rücktransformation in den Zeitbereich, möglich.

Es kann aber auch aus Gründen der Verarbeitungsgeschwindigkeit oder der Kosten vorteilhaft sein, die Korrelation der beiden von der Auswahlschaltung 113 ausgewählten Signale im Korrelator 115 mit speziellen Bauelementen analog (also nicht digital) vorzunehmen. Dann wird die Schnittstelle zum Rechner 134 zwischen Block 115 und 116 liegen. Auch in diesem Fall fährt der Korrelator 115 den Parameter ₇ durch, und er bildet Q(_{T}) aus u1 und u2. Dann ergibt sich das Maximum M, das im nachgeschalteten Block 116 zum Meßwert Δτₘₐₓ weiterverarbeitet wird.

### 5.2.2 Kompensation und Adaption

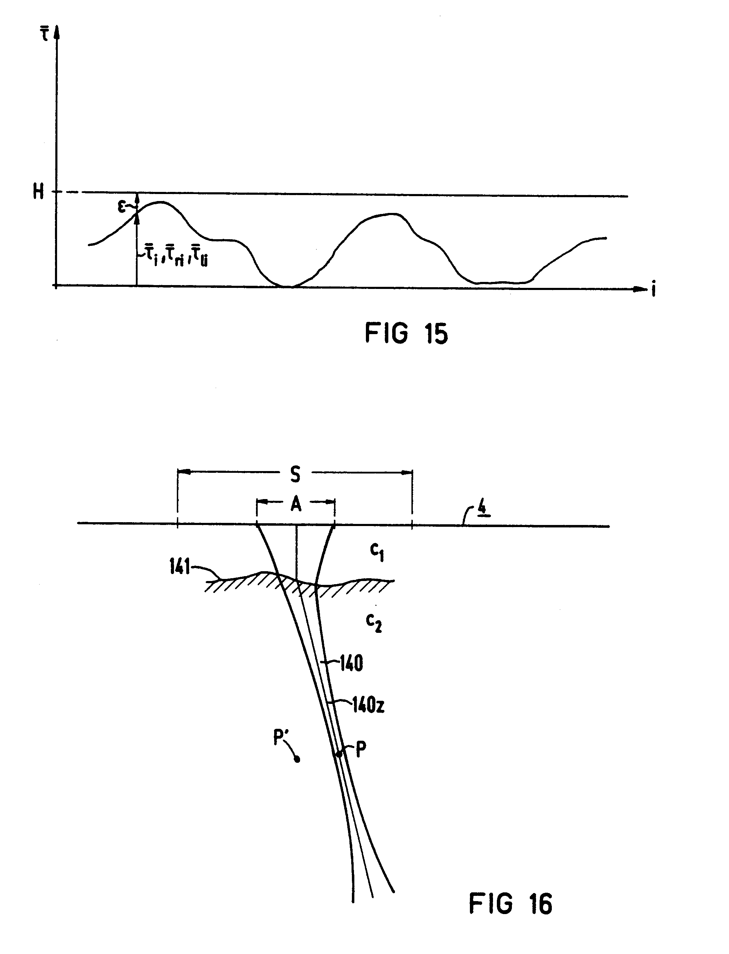

Die Korrektur mittels der Blöcke 105 bis 109 und 127 bis 131 erfolgt prinzipiell in der in Fig. 15 gezeigten Weise: Die errechneten Kurven _{T̅}i̅,̅ _{T̅}r̅i̅,̅ τ̅l̅i̅ geben die Laufzeitverluste in der Störschicht gegenüber einer gedachten planparallelen, homogenen Schicht wieder. Im Sende- und Empfangsfall werden diese Laufzeiten bis hinauf auf einen konstanten Wert H ergänzt, der gerade so hoch liegt, daß keine negativen Verzögerungswerte entstehen, weil diese nicht realisierbar wären. Die rechnerische Ermittlung dieser Ergänzungen _{E} und die Ausführung als Zusatzverzögerung zum Zwecke der Korrektur besorgen die Blöcke 105 bis 109 im Sendefall und die Blöcke 127 bis 131 im Empfangsfall. Die Blöcke 105 bis 109 und 127 bis 131 enthalten also - zusätzlich zum Block 111 - elektronische Verzögerungsglieder.

Wann diese Korrekturblöcke 105 bis 109 und 127 bis 131 wirksam werden, ergibt sich aus einer Überlegung anhand der Fig. 16. Hier ist der Sendestrahl 140 der Sendeapertur S von einer im Schallstrahl glatten, aber schräg zum Array 4 verlaufenden Grenzschicht 141 von der senkrechten Abstrahlung aus dem Array 4 weggebrochen. Da die Grenzschicht 141 glatt ist, bleibt die Schallstrahlbreite unbeeinflußt. in denselben Grenzen verläuft die Empfangsempfindlichkeit des fokussierten Empfängers (zunächst wird gleiche Apertur A wie im Sendefall angenommen). Die Signale von zentral getroffenen, d. h. auf dem Zentralstrahl 140z liegenden Punkt P kommen wir im ungestörten Fall - nach Fokussierungsverzögerung - gleichphasig zusammen. Mit dem voranstehend angegebenen Verfahren wird die Brechung nicht festgestellt. Nur Irritationen, die zu einer Strahlverbreiterung führen oder von einer in Strahlbereich 140 gekrümmten oder welligen Grenzschicht 141 herrühren, werden entdeckt. Die Sachlage wäre anders, wenn die Echos, wie erwartet, vom Punkt P' kämen. Dies läßt sich mit einer gegenüber der Empfangsapertur A viel größeren Sendeapertur S näherungsweise erzwingen, weil eine durchgängig schräge Grenzschicht 141 umso unwahrscheinlicher ist, je größer die Sendeapertur S ist.

Es wird also hier so vorgegangen, daß die Messungen mit der größtmöglichen Sendeapertur S durchgeführt werden, auch wenn dies wegen des dann nötigen Mitlaufs der Sendefokussierung mit der Tiefe viel mehr Zeit in Anspruch nimmt als für ein Real-Time-Bild eigentlich zulässig ist. Der Meßlauf muß in der Adaptionsphase für einen Applikationsort nur einmal vor der eigentlichen Messung (B-Bild-Untersuchungsphase) durchgeführt werden (es sei denn, das Array 4 wird stark gekippt, so daß sich die Abtastebene stark verlagert). Somit fällt diese Zeit nicht störend ins Gewicht.

Eine weitere Verbesserung der Meßgenauigkeit ist zu verzeichnen, wenn ein iteratives Vorgehen (Iterationsverfahren) gewählt wird. Nach der ersten Messung in der beschriebenen Weise wird eine Korrektur zunächst nur am Sendesignal vorgenommen; mit diesem korrigierten Sendesignal wird eine erneute adaptive Messung in der zuvor beschriebenen Art durchgeführt. Dabei liegt die Sendekeule bereits in verbesserter Form vor, und die Messung ist weniger durch Brechungseffekte gestört. Es können unter Umständen mehrere Iterationsschritte gewählt werden.

Ein Problem ergibt sich dann, wenn die Sendeapertur, wie vorgeschlagen, so groß wie möglich und damit u. U. breiter als die Empfangsapertur ist und wenn damit keine Korrekturwerte für die entsprechend schrägen Laufwege vorliegen. Eine Lösung besteht darin, die Empfangsapertur gleich breit wie die Sendeapertur zu wählen.

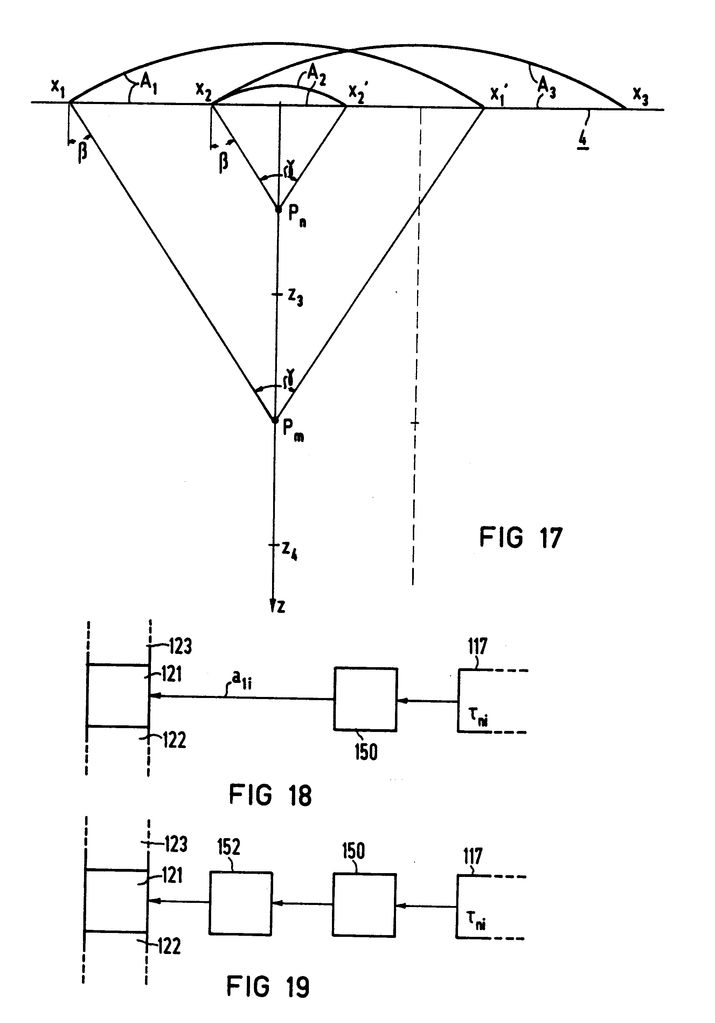

An dieser Stelle sei auch noch bemerkt, daß die Adaption zunächst natürlich nur für den Tiefenbereich gilt, aus dem die Meßwerte stammen. Mit dem Satz von Korrekturkurven für senkrechten und unterschiedlich schrägen Schalleinfall kann auch die Korrektur von Fokussierungen vorgenommen werden, die nicht im Meßtiefenbereich liegen. Dies wird anhand von Fig. 17 veranschaulicht: Die korrigierte Apertur sei A1 (zwischen x1 und x1'). Ein dynamisch fokussiertes Arraysystem wird mit möglichst tiefenunabhängigem Fokussierungsgrad arbeiten; es wird also z. B. für den Nahbereich z = 0 bis z = z3 mit der kleineren Apertur A2 (zwischen x2 und x2') und angepaßter Krümmung arbeiten. Die Apertur A2 ist so gewählt, daß der Öffnungswinkel y vom Objektpunkt (Pm oder Pn) möglichst konstant ist. Damit beträgt der Winkel für den Schrägeinfall unabhängig von der Apertur maximal Beta. Für die Korrektur der Laufzeitfehler vor der kleineren Apertur stehen also Meßwerte zur Verfügung, die mit der größeren Apertur gewonnen wurden. So findet man den Korrekturwert für x2 der kleinen Apertur mit dem schrägen Einfallswinkel Beta in der Kurve für den Randwert der Apertur A3. Dies Vorgehen kann sinngemäß auch auf Fokussierungen in Tiefen größer als z4 ausgedehnt werden.

Fig. 18 zeigt eine Alternative, die anstelle der Blöcke 118 und 119 im Rechner 134 nach Fig. 14 eingesetzt werden kann. Bei dieser Alternative wird - wie vorangehend bei Fig. 8 geschildert - von einer Ausgleichsgeraden AG Gebrauch gemacht. Das heißt, die in Fig. 18 gezeigte Schaltung 150 ist imstande, einmal durch die von der Einrichtung 117 gelieferten Werte ₁ni(x) eine Ausgleichsgerade AG zu legen und danach auch die jeweiligen Differenzen aµ zu dieser Ausgleichsgeraden AG zu bestimmen. Die Differenzwerte aₗᵢ werden zur weiteren Verarbeitung in obigem Sinne den Speichern 121, 122, 123,... zugeführt.

In Fig. 19 ist gezeigt, daß man auch bei einer Vorgehensweise nach Fig. 18 zweckmäßigerweise ein Mittelung durchführt. Zu diesem Zweck ist zwischen dem Ausgang der Schaltung 150 und den Speichern 121, 122, 123, ... eine Mittelungseinrichtung 152 eingeschaltet.

Eine dritte Alternative ist in Fig. 20 dargestellt. Hier wird mittels einer Filtereinrichtung 154 zwischen den Blöcken 117 und 152 eine Hochpaßfilterung im Ortsbereich durchgeführt. Das Ergebnis wird in einem (nicht gezeigten) Speicher abgelegt, der im Block 154 untergebracht sein kann. Mit anderen Worten, wenn die letzte Kurve τ₇ᵢ (im Beispiel von Fig. 7) gefiltert ist, werden alle hochpaßgefilterten und bis dahin gespeicherten Abtastwerte der sieben Kurven im Block 152 gemittelt, und zwar in der Weise, wie bei in Fig. 7 angegeben. Die Größenordnung der (Orts-)Eckfrequenz ξ^{*} bei der Hochpaßfilterung sollte bei dem Kehrwert der Länge der gesamten Empfangsapertur (z. B. E17, E7, Er7) liegen.

Es soll noch erwähnt werden, daß ein Schaltung 150 oder 154 zweckmäßigerweise zwischen die Blöcke 117 und 118 in Fig. 14 zwischengeschaltet ist.

Für den unter Punkt 5.1.9 genannten Weg der Messung der Korrelationen gegen ein Summenempfangssignal s ist die Signalverarbeitung als Teilbild von Fig. 14 im Blockschaltbild der Fig. 21 dargestellt. Das Summenempfangssignal s des Summierers 132 ist hier der (modifizierten) Schalteinrichtung 113a zugeführt. Von hier gelangt das Signal s in die Tiefenselektions-Einrichtung 114. Dieser wiederum ist der Korrelator 115 nachgeschaltet. Dem Korrelator 115 ist hier direkt die Mittelungseinrichtung 118 nachgeschaltet. Durch diese Schaltungsanordnung wird bewirkt, daß dem Korrelator 115 als Meßwert der Abstand des Korrelationsmaximums M vom Ursprung O entnommen wird. Dieser Meßwert ist ein Maß für die unmittelbar unter den Elementarwandlern wirksame Laufzeitverzerrung, wie sie bei den vorangehend geschilderten Verfahren jeweils durch Aufintegration gewonnen wurde. Die weitere Verarbeitung erfolgt wie bei Fig. 14.

Ein Unterschied ergibt sich hier bezüglich der voranstehend erläuterten Iteration. Hier kann man zusätzlich zur Korrektur der Sendefokussierung mittels der Blöcke 105 bis 109 ab dem ersten Iterationsschritt bei der Adaption die Wahl treffen, ob mit dem unkorrigierten Summenempfangssignal s', das von einem Summierer 156 vor den Blöcken 127, ... geliefert wird, ober ob mit dem korrigierten Summenempfangssignal s vom Summierer 132 (hinter den Blöcken 127, ... angeordnet) korreliert werden soll. Beide Möglichkeiten sind in Fig. 21 vorgesehen. Ein Schalter 158 innerhalb der Meßwert-Auswahlschaltung 113a ermöglicht die Umschaltung zwischen beiden Möglichkeiten.

### 5.2.3 Anwendung des Prinzips beim Sektorscan

Das obengenannte Prinzip der adaptiven Antenne ist in seiner Anwendungsmöglichkeit nicht auf den Parallelscan eingeschränkt. Es ist auf die Verhältnisse bei einem "Curved Array" übertragbar. Wie es auf den elektronischen Sektorscan übertragen werden kann, soll anhand der nächsten drei Figuren erläutert werden.

Zunächst sei darauf hingewiesen, daß die Teilung eines Arrays für den elektronischen Sektorscan natürlich viel feiner ist (z. B. 0,5 Wellenlängen) als die eines linearen Arrays (z. B. 1,5 Wellenlängen). Die folgenden Figuren gehen davon aus, daß für die Korrekturmessung soviele Elementarwandler nach dem Schwenk und der Fokussierung zusammengeschaltet werden, daß dieselbe wirksame Gesamtbreite der Elementarwandler entsteht, wie vorher beim Parallelscan gewählt.

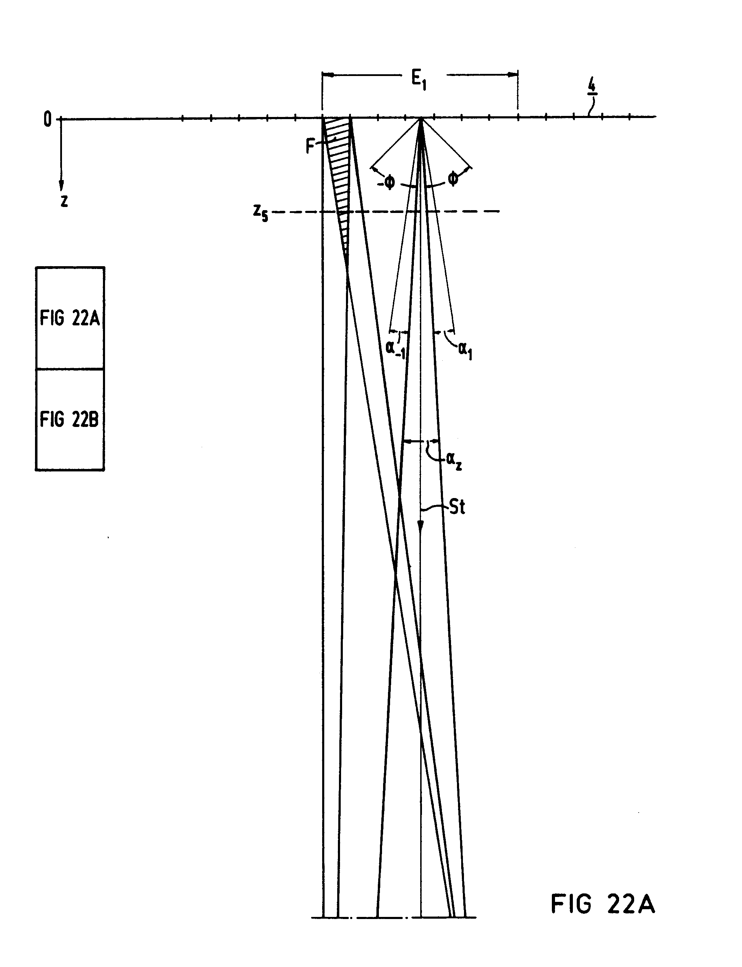

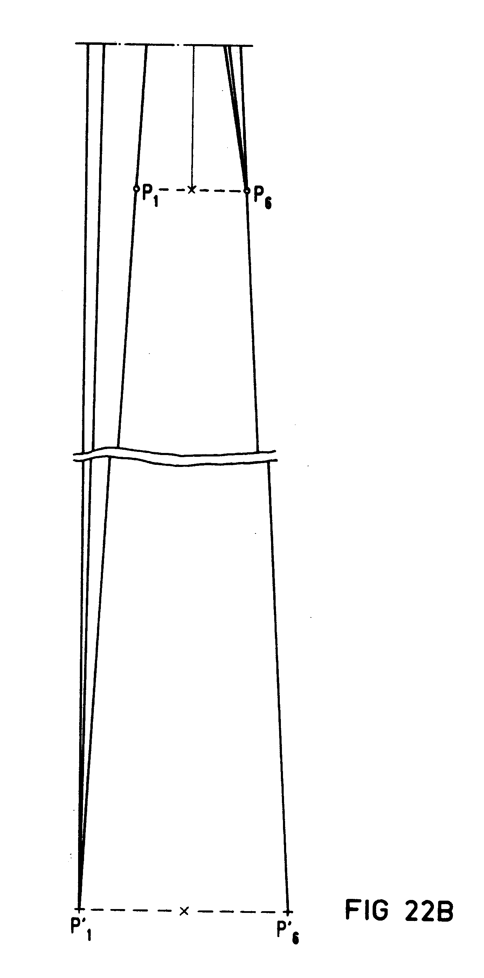

Fig. 22 zeigt, wie sich die geometrischen Verhältnisse darstellen, wenn für das Signalgewinnungsgebiet zwischen P₁ ... P₆ und P1... Ps die gleiche Flächengröße angenommen wird wie beim Parallelscan. Die beiden extremen Rücklaufwege von P₆ und P1 ergeben bis zur Tiefe z5 = 0,5 cm eine Überdeckung (schraffierte Fläche F) im wandlernahen Bereich, die bei z5 noch ca. halb so breit ist wie bei z = 0. Wenn man ein solches Maß als Kriterium für die maximal erlaubte Größe (Breite und Tiefe) des Signalgewinnungsgebiets (auch bei Parallelscan) heranzieht, ist eine Beziehung zwischen dieser Gebietsgröße und deren Tiefenlage und der Dicke der ausmeßbaren Störschicht hergestellt. Fig. 22 zeigt, daß die Zahl der zur Mittelung erlaubten Abtastzeilen und die Breite der direkt meßbaren Empfangsapertur E1 vergleichbar groß sind wie beim Parallelscan. Beim Sektorscan allerdings liegt die Rücklaufwegstrecke bei großen Schwenkwinkeln 4) von z. B. + 45 oder -45° gegen die Senkrechte sehr viel schräger in der Störschicht. Der Wert von z5 wird damit um den Faktor 0,707 verkleinert. In der Praxis genügt ein Kompromiß, der auf einen Verkürzungsfaktor von ca. 0,8 hinausläuft.

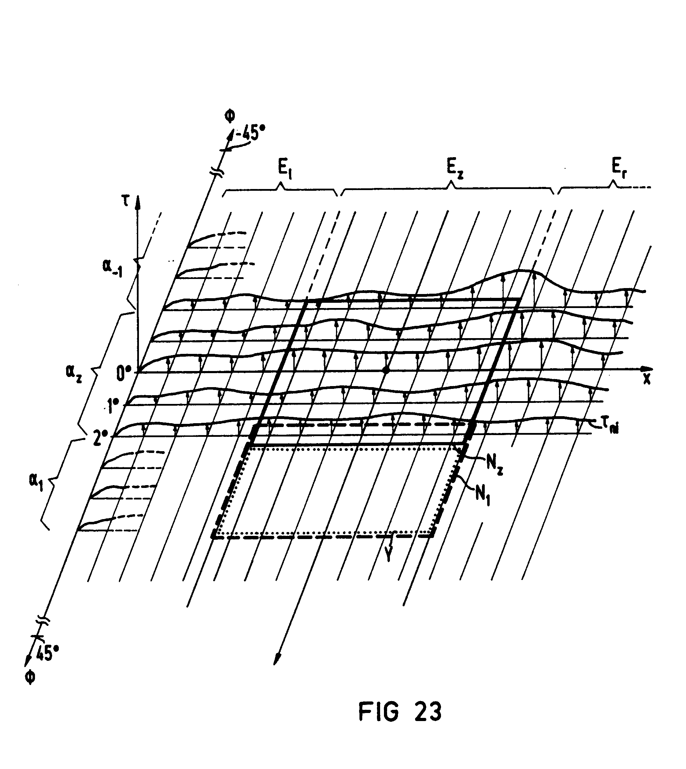

Die Signalverarbeitung setzt die gebräuchlichen Leistungsmerkmale eines elektronischen Sektorscanners vorasus, wie Schwenk und Fokussierung im Sende- und Empfangsfall, ausgelegt für ein homogenes Übertragungsmedium. Dann erhält man nach der für den Parallelscan oben geschilderten Weise die in Fig. 23 dargestellten Datensätze für _{T}ni. Der Index n bezeichnet jetzt die Nummer der Sendestrahlrichtung mit aufsteigenden Ablenkwinkeln, und i bezeichnet die Wandlernummer auf dem Array. Nur die Sendestrahlrichtungen innerhalb des Winkelbereichs a_{z} und die Wandler innterhalb des Empfangsapertur E1 sollen untereinander "aligned" und miteinander gemittelt werden (siehe Fig. 22). Dieses Feld Nz ist in Fig. 23 dick umrandet. Für eine größere Empfangsapertur als EI wird man nun gemäß den obigen Ausführungen für Parallelscan die mit EI und Er gekennzeichneten Kurven - unter Beibehaltung des "Aligning" aus dem Zentralbereich Ez - mitteln und im Bereich a_{z} verwenden.

Für den Nachbarwinkelbereich werden die Daten genauso gewonnen wie für α_{z}. Das "Aligning" dieser Bereiche untereinander ergibt sich hier nicht in derselben Weise die im Fall des Parallelscan. Man sollte daher die Nachbarbereiche überlappend wählen, wie in Fig. 23 mit den gestrichelt und dick ausgezogenen Feldern N1 und Nz angedeutet. Der "neue" Bereich ai beginnt also das "Aligning" mit ein bis drei untereinander in Linie gebrachten ("aligned") und gemittelten Kurvenabschnitten des Bereichs a_{z}.

Die Mittelung kann sich auf aneinander angrenzende Bereiche beschränken, wie es durch die punktiert umrandete Fläche Y symbolisiert ist.

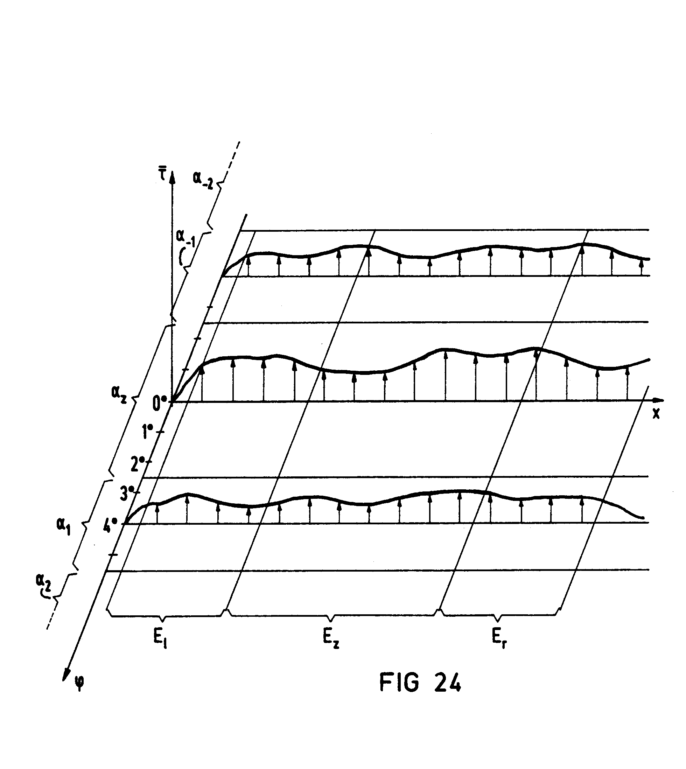

Man erhält nach der Mittelung Kurven nach Fig. 24, die für jeden Winkelbereich (d. h. a_{z}, α₁, α₋₁, a₂, a-₂, ....) gelten. Für a zum Beispiel gilt im Bereich von E_{z} und für die linken und rechten Randbereiche EI und Er, die über Ez hinausgehen, das dick ausgezogene Kurvenstück.

### 5.2.4 Realisierung der zeitlichen Mittelung und der Iteration

Nach Fig. 14 kann man sich die Anwendung eines Ultraschall-B-Scanners mit adaptiver Antenne folgendermaßen vorstellen: Der Applikator 101 erhält einen auf die Steuerung 133 einwirkenden Tastknopf 160, mit dem in jeder neuen Scanposition, solange der Knopf 160 gedrückt wird, die automatische Adaption ausgelöst wird. Je länger man den Knopf 160 drückt, desto mehr komplette Scandurchläufe werden zur Mittelung durchgeführt. Der Untersucher kippt das Array 101 während der Adaption geringfügig. Die kürzest mögliche Zeit für die Adaption beträgt ca. 120 ms, wenn man drei Sendefoki für die Tiefe des Signaleinzugsgebiets vorsieht. Bei der Iteration werden die in dem vorangehenden Adaptionsschritt ermittelten Korrekturwerte für die nachfolge Sendephase innerhalb der Adaption zur Verbesserung des Sendefokus verwendet. Dabei kann die Apertur (beim Empfang und/oder Senden) von einem kleinsten auf einen größten Wert steigen.

Nach der Adaption kann in der Untersuchungsphase ein normaler schneller Scan durchgeführt werden, solange die Schnittebene nicht so stark verändert wird, daß merklich andere Strecken im Unterhaut-Fettgewebe durchlaufen werden. Das verfahren ist prinzipiell also auch für die Herzdarstellung geeignet. Das Verkippen der Abtastebene in der Adaptionsphase erübrigt sich dann wegen der Eigenbewegung des Herzens.

Zur Anpassung an die speziellen Gegebenheiten einer Applikation kann nach Bildeindruck die Dicke der Bauchspeckschicht und die maximale Tiefenlage der hinteren Berandung P1', P6' des Signaleinzugsgebiets am Terminal des Scanners eingegeben werden. Der Rechner 134 bestimmt daraus nach den oben angegebenen Kriterien (Überdeckungsgrad der Rücklaufwege) Lage und Größe des Signalerfassungsgebiets P1 ... P6 bis P1 ... Pg.

## Patentansprüche

1. Verfahren zur B-Bild-Darstellung einer Schnittebene eines Untersuchungsobjektes, das schalltechnisch gesehen mit störenden Inhomogenitäten (2) behaftet ist, mit einem medizinischen Ultraschall-Bildgerät, welches ein UItraschall-Array (4, 101) umfaßt, das aus einer Vielzahl von Elementarwandlern besteht, wobei das Verfahren in eine Adaptionsphase und eine darauf folgende Bilddarstellungsphase unterteilt ist, mit den Schritten:
a) in der Adaptionsphase wird die Schnittebene mittels einer vorgegebenen Sendeapertur (S1,S2) des Ultraschall-Arrays durch fokussierte Ultraschall-Sendestrahlen abgetastet,
b) in der Adaptionsphase werden reflektierte Echosignale von den Elementarwandlern einer vorgegebenen aktiven Empfangsapertur (E1,E2,E6) des Ultraschall-Arrays empfangen und die durch die Inhomogenitäten bedingten Störeffekte (Δτᵢ) gemessen und
c) in der Adaptionsphase werden aus den Meßwerten Korrekturwerte (_{E}) für die Verzögerungszeiten der Signale (u_{;}(t)) der Elementarwandler gegenüber einer Standard-Fokussierung (24), die gültig ist für ein Untersuchungsobjekt ohne störende Inhomogenitäten, abgeleitet,
dadurch gekennzeichnet, daß
d) die Korrekturwerte (_{E}) aus der Kreuzkorrelation (Q(₁)) der elektrischen Empfangs- Signale (u_{;}(t)) von den Elementarwandlern des Ultraschall-Arrays (4,101) abgeleitet werden und, daß
e) in der anschließenden B-Bild-Darstellungsphase für die Echtzeit-Untersuchungsdauer dieser Schnittebene bei der Emission und/oder beim Empfang die Verzögerungszeiten der aktiven Apertur des Ultraschall-Arrays in Abhängigkeit von den Korrekturwerten (e) geändert werden, wodurch die Störeffekte aufgrund der Inhomogenitäten kompensiert werden.

2. Verfahren nach Anspruch 1, dadurch gekennzeichnet, daß zur Bildung der Kreuzkorrelation (Q(₁)) jeweils die Signale zweier direkt benachbarter Elementarwandler (W1, W2, ...) oder zweier benachbarter Gruppen von Elementar- wandlern herangezogen werden.

3. Verfahren nach Anspruch 1 oder 2, dadurch gekennzeichnet, daß jeweils aus der Zeitverschiebung (LlTM) des Maximums (M) der Korrelationsfunktion (Q(₁)) gegen den für ein homogenes Untersuchungsobjekt geltenden Erwartungswert eine der Schallgeschwindigkeitsverteilung in der dem Ultraschall-Array (4;101) unmittelbar vorgelagerten Untersuchungsstrekke des Untersuchungsobjekts entsprechende Laufzeitdifferenz-Verteilung bestimmt wird, und daß aus dieser Verteilung nach Abtasten der gesamten Schnittebene die Meßwerte gewonnen und die Korrekturwerte (_{E}) abgeleitet werden.

4. Verfahren nach einem der Ansprüche 1 bis 3, dadurch gekennzeichnet, daß die Korrekturwerte (_{E}) nach Mittelung ermittelt werden.

5. Verfahren nach Anspruch 4, dadurch gekennzeichnet, daß das Ultraschall-Array (4; 101) in der Adaptionsphase zur Erzielung eines geringfügigen Schwenks der Abtastebene gekippt wird.

6. Verfahren nach Anspruch 4 oder 5, dadurch gekennzeichnet, daß aus den Echosignalen der Elementarwandler (W1, W2, ...) nach der Methode des Aligning Korrekturwerte für die Fokussierung gewonnen werden, wobei nach der Methode des Aligning die aus unterschiedlichen Abtaststrahlen gewonnen Laufzeitdifferenzen der Echosignale nach der Methode der kleinsten Fehlerquadrate in Deckung gebracht werden, und daß diese Korrekturwerte anschließend gemittelt werden.

7. Verfahren nach einem der Ansprüche 1 bis 6, dadurch gekennzeichnet, daß in der Adaptionsphase gewonnene Korrekturwerte für die Fokussierung im folgenden Sendeschritt der Adaptionsphase verwendet werden.

8. Medizinisches Ultraschall-Bildgerät zur B-Bild- Darstellung einer Schnittebene eines Untersuchungsobjekts, das schalltechnisch gesehen mit störenden Inhomogenitäten behaftet ist, mit einem Ultraschall-Array (4,101), das eine vorgegebene aktive Sendeapertur (51,52) mit Elementarwandlern aufweist und das ebenfalls eine vorgegebenen aktive Empfangsapertur (E1,E2,E6) mit einer Vielzahl von Elementar- wandlern (W1,W2...) aufweist, wobei den Elementarwandlern der aktiven Empfangsapertur eine erste Empfangsverzögerungseinrichtung (111) zur Bildung einer Standard-Empfangsfokussierung, die gültig ist für ein Untersuchungsobjekt ohne störende Inhomogenitäten, und eine zweite Empfangsverzögerungseinrichtung (127 bis 131) zugeordnet sind, mit Mitteln (133,160) zum Betrieb des Ultraschall-Bildgeräts in einer Adaptionsphase und einer anschließenden B-Bild-Darstellungsphase, die eine Einrichtung zur Ermittlung von Korrekturwerten umfassen, die in der Adaptionsphase die durch die Inhomogenitäten bedingten Störeffekte mißt und aus den Meßwerten Korrekturwerte ableitet, mit denen in der anschließenden B-Bild-Darstellungsphase die Störeffekte aufgrund der Inhomogenitäten kompensiert werden, dadurch gekennzeichnet, daß die Einrichtung zur Ermittlung von Korrekturwerten (112 bis 119 und 121 bis 126) einen Korrelator (115) umfaßt, mit dem in der Adaptionsphase die Echosignale über eine vorgegebene Korrelationsfunktion miteinander korreliert werden, daß den Elementarwandlern der aktiven Sendeapertur (51,52) eine erste Sendeverzögerungseinrichtung (104) zur Bildung einer Standard-Sendefokussierung, zugeordnet ist, daß die Einrichtung (112 bis 119 und 121 bis 126) zur Ermittlung von Korrekturwerten eingangsseitig mit den Ausgängen der ersten Empfangsverzögerungseinrichtung (111) zur Bildung der Standard-Empfangsfokussierung und ausgangsseitig mit einer zweiten Sende-und/oder der zweiten Empfangsverzögerungseinrichtungen (105 bis 109 bzw. 127 bis 131) verbunden ist, die den Standard-Sende- bzw. Standard-Empfangsverzögerungseinrichtungen (104 bzw. 111) zugeordnet sind und deren Verzögerungszeiten von der Einrichtung (112 bis 119 und 121 bis 126) zur Ermittlung von Korrekturwerten bestimmt sind.

9. Ultraschall-Bildgerät nach Anspruch 8, dadurch gekennzeichnet, daß dem Korrelator (115) die Echosignale (u1,u2) einzelner Elementarwandler (W1,W2...) zugeführt sind.

10. Ultraschall-Bildgerät nach Anspruche 8 oder 9, dadurch gekennzeichnet, daß der Korrelator (115) Bestandteil eines frei programmierbaren Rechners (134) ist.

11. Ultraschall-Bildgerät nach einem der Ansprüche 8 bis 10, dadurch gekennzeichnet, daß dem Korrelator (115) eine Einrichtung (116) zum Aufsuchen der Lage des Maximums (M) der Korrelationsfunktion (Q(₁)) nachgeschaltet ist.

12. Ultraschall-Bildgerät nach Anspruch 11, dadurch gekennzeichnet, daß der Einrichtung (116) zum Aufsuchen der Lage des Maximums eine Einrichtung (117) zur Aufaddition nachgeschaltet ist.

13. Ultraschall-Bildgerät nach Anspruch 12, dadurch gekennzeichnet, daß der Einrichtung (117) zur Aufaddition eine Schaltung (118) zum Aligning nachgeschaltet ist, welche die aus den Echosignalen der Elementarwandler (W1,...) aus unterschiedlichen Abtaststrahlen gewonnenen Laufzeitdifferenzen nach der Methode der kleinsten Fehlerquadrate in Deckung bringt und mittelt.

14. Ultraschall-Bildgerät nach Anspruch 12, dadurch gekennzeichnet, daß der Einrichtung (117) zur Aufaddition eine Schaltung (150) zur Bildung einer Ausgleichsgeraden (AG) und Differenzbildung oder ein Hochpaßfilter (154) nachgeschaltet ist.

15. Ultraschall-Bildgerät nach einem der Ansprüche 8 bis 14, dadurch gekennzeichnet, daß dem Korrelator (115) eine Mittelungseinrichtung (119;152) nachgeschaltet ist.

16. Ultraschall-Bildgerät nach einem der Ansprüche 8 bis 15, dadurch gekennzeichnet, daß ein Schalter (160) vorgesehen ist, mit dem die Dauer der Adaptionsphase bestimmbar ist.

17. Ultraschall-Bildgerät nach einem der Ansprüche 8 bis 16, dadurch gekennzeichnet, daß eine Einrichtung (114) zur Wahl des Tiefenbereichs (z3 bis z4) vorgesehen ist, aus dem Echosignale für die Korrelation entnommen werden.

## Claims

1. A method for the B-image display of a sectional plane of an examination object which acoustically speaking is impaired with disturbing inhomogeneities (2), with a medical ultrasonic imaging apparatus which comprises an ultrasonic array (4, 101) formed by a plurality of transducer elements, the method being divided into an adaptation phase and a subsequent imaging phase, with the steps:
a) in the adaptation phase, the sectional plane is scanned by means of a given transmission aperture (S1, S2) of the ultrasonic array by focussed ultrasonic transmission rays,
b) in the adaptation phase, reflected echo signals are received by the transducer elements of a given active receiving aperture (E1, E2, E3) of the ultrasonic array and the disturbance effects (Δ1) resulting from the imhomogeneities are measured and
c) in the adaptation phase, correction values (6) are derived from the measurement values for the delay times of the signals (u_{;}(t)) of the transducer elements relative to a standard focussing (24), which is valid for an examination object without disturbing inhomogeneities,
characterised in that
d) the correction values (_{E}) are derived from the cross correlation (Q (_{T})) of the electrical reception signals (u_{;}(t)) of the transducer elements of the ultrasonic array (4, 101), and in that
e) in the subsequent B-imaging phase, for real-time examination period of the said sectional plane, the delay times of the active aperture of the ultrasonic array are altered during the transmission or reception as a function of the correction values (e), so that the disturbance effects resulting from the inhomogeneities are compensated.

2. A method according to claim 1, characterised in that the signals of two directly adjacent transducer elements (W1, W2, ... ) or two adjacent groups of transducer elements are used in each case or imaging the cross correlation (Q (T)).

3. A method according to claim 1 or 2, characterised in that a running time differential distribution corresponding to the sound velocity distribution in the examination route of the examination object established directly in front of the ultrasonic array (4; 101) is determined in each case from the time displacement (O_{TM}) of the maximum (M) of the correlation function (Q (_{T})) relative to the expected value valid for a homogeneous object and, after scanning the entire section plane, the measurement values are obtained from this distribution and the correction values (e) derived.

4. A method according to one of claims 1 to 3, characterised in that the correction values (e) are determined by averaging.

5. A method according to claim 4, characterised in that the ultrasonic array (4; 101) in tilted in the adaptation phase in order to obtain a slight pivoting of the scanning plane.

6. A method according to claim 4 or 5, characterised in that correction values for the focussing are obtained from the echo signals of the transducer elements (W1, W2) using the aligning method, according to which the running time differences of the echo signals derived from different scanning rays are made congruent according to the least squares method and the said correction values are then averaged.

7. A method according to one of claims 1 to 6, characterised in that correction values obtained in the adaptation phase are used for the focussing in the following transmission step of the adaptation phase.

8. A medical ultrasonic imaging apparatus for the B-image display of a sectional plane of an examination object, which acoustically speaking is impaired with disturbing inhomogeneities, with an ultrasonic array (4, 101), which comprises a given active transmission aperture (51, 52) with transducer elements and also comprises a given active reception aperture (E1, E2, E6) with a plurality of transducer elements (W1, W2...), a first reception delay device (111) for forming a standard reception focussing, which is valid for an examination object without disturbing inhomogeneities, and a second reception delay device (127 to 131) being associated with the transducer elements of the active reception aperture, with means (133, 160) for operating the ultrasonic imaging apparatus in an adaptation phase and a subsequent B-imaging phase, which means comprise a device for determining correction values, which in the adaptation phase measures disturbance effects caused by the inhomogeneities and from the measurement values derives correction values, by means of which the disturbance effects caused by the inhomogeneities are compensated in the subsequent B-imaging phase, characterised in that the device for determining correction values (112 to 119 and 121 to 126) comprises a correlator (115), by means of which the echo signals are correlated with one another in the adaptation phase by means of a given correlation function, a first transmission delay device (106) for forming a standard transmission focussing being associated with the transducer elements of the active transmission aperture (51, 52), the device (112 to 119 and 121 to 126) for determining correction values is connected at its input side to the outputs of the first reception delay device (111) for forming the standard reception focussing and is connected at its output side to a second transmission delay device and/or the second reception delay device (105 to 109 or 127 to 131), which are associated with the standard transmission or standard reception delay devices (104, 111) and whose delay times are determined by the device (112 to 119 and 121 to 126) for determining correction values.

9. An ultrasonic imaging apparatus according to claim 8, characterised in that the echo signals (u1, u2) of individual transducer elements (W1, W2...) are supplied to the correlator (115).

10. An ultrasonic imaging apparatus according to claims 8 or 9, characterised in that the correlator (115) forms part of a freely programmable computer (134).

11. An ultrasonic imaging apparatus according to one of claims 8 to 10, characterised in that a device (116) for finding the position of the maximum (M) of the correlation function (Q (_{T})) is connected after the correlator (115).

12. An ultrasonic imaging apparatus according to claim 11, characterised in that a device (117) for addition is connected after the device (116) for finding the position of the maximum.

13. An ultrasonic imaging apparatus according to claim 12, characterised in that a circuit (118) for aligning is connected after the device (117) for addition and according to the least squares method makes congruent and averages the running time differences of the echo signals of the transducer elements (W1, ...) derived from different scanning rays.

14. An ultrasonic imaging apparatus according to claim 12, characterised in that a circuit (150) for forming a differential line (AG) and differential formation or a high-pass filter (154) is connected after the device (117) for addition.

15. An ultrasonic imaging apparatus according to one of claims 8 to 14, characterised in that an averaging device (119; 152) is connected after the correlator (115).

16. An ultrasonic imaging apparatus according to one of claims 8 to 15, characterised in that a switch (160) is provided, by means of which the duration of the adaptation phase can be determined.

17. An ultrasonic imaging apparatus according to one of claims 8 to 16, characterised in that a device (114) for selecting the depth range (z3 to z4) is provided, from which echo signals are taken for the correlation.

## Revendications

1. Procédé pour représenter l'image (B) d'un plan de coupe d'un objet d'examen, qui, du point de vue de la technique de transmission du son, est affecté d'hétérogénéités perturbatrices (2), comportant un appareil médical de formation d'images à ultrasons, qui comprend un réseau à ultrasons (4,101), qui est constitué par une multiplicité de transducteurs élémentaires, le procédé étant subdivisé en une phase d'adaptation et une phase ultérieure de représentation d'images, comprenant les étapes suivantes :
a) pendant la phase d'adaptation, le plan de coupe est exploré par des faisceaux d'émission ultrasonore focalisés, à l'aide d'une ouverture d'émission prédéterminée (S1,S2) du réseau à ultrasons,
b) pendant la phase d'adaptation, des signaux d'échos réfléchis sont reçus par les transducteurs élémentaires d'une ouverture de réception active prédéterminée (E1, E2, E6) du réseau à ultrasons et les effets perturbateurs (Dt_{;}), produits par les hétérogénéités, sont mesurés, et
c) pendant la phase d'adaptation, des valeurs de correction (e) pour les retards des signaux (u;(t)) des transducteurs élémentaires par rapport à une focalisation standard (24), qui est valable pour un objet d'examen ne comportant pas d'hétérogénéités perturbatrices, sont obtenues à partir des valeurs de mesure,
caractérisé par le fait que
d) les valeurs de correction (e) sont obtenues à partir de la corrélation croisée (Q(t)) des signaux électriques de réception (u;(t)) des transducteurs élémentaires du réseau à ultrasons (4,101), et que
e) dans la phase suivante de représentation d'images B pendant la durée d'examen en temps réel de ce plan de coupe, lors de l'émission et/ou de la réception, les retards de l'ouverture active du réseau à ultrasons sont modifiés en fonction des valeurs de correction (e), ce qui permet de compenser les effets perturbateurs dûs aux hétérogénéités.

2. Procédé suivant la revendication 1, caractérisé par le fait que lors de la formation de la corrélation croisée (Q(t)), on utilise respectivement les signaux de deux transducteurs élémentaires (W1,W2,...) directement voisins ou de deux groupes voisins de transducteurs élémentaires.

3. Procédé suivant la revendication 1 ou 2, caractérisé par le fait que respectivement à partir du décalage temporel (Dt_{M}) du maximum (M) de la fonction de corrélation (Q(t)) par rapport à la valeur espérée valable pour un objet d'examen homogène, on détermine une répartition des différences des temps de propagation, qui correspond à la répartition de la vitesse du son dans la section d'examen de l'objet d'examen, qui est située directement en amont du réseau à ultrasons (4:101), et qu'à partir de cette répartition, après exploration de l'ensemble du plan de coupe, on obtient les valeurs de mesure et on en tire les valeurs de correction (e).

4. Procédé suivant l'une des revendications 1 à 3, caractérisé par le fait qu'on détermine les valeurs de correction (e) de formation de la moyenne.

5. Procédé suivant la revendication 4, caractérisé par le fait que pendant la phase d'adaptation, le réseau à ultrasons (4;101) est basculé pour l'obtention d'un léger basculement du plan d'exploration.

6. Procédé suivant la revendication 4 ou 5, caractérisé par le fait qu'à partir des signaux d'échos des transducteurs supplémentaires (W1,W2,...) on obtient des valeurs de correction pour la focalisation selon la méthode aligning (alignement), méthode selon laquelle on amène les différences de temps de propagation de signaux d'échos, obtenues à partir de faisceaux d'exploration différents, en recouvrement selon la méthode des moindres carrés et qu'on forme ensuite la moyenne de ces valeurs de correction.

7. Procédé suivant l'une des revendications 1 à 6, caractérisé par le fait qu'on utilise des valeurs de correction obtenues pendant la phase d'adaptation, pour la focalisation lors de l'étape d'émission suivante de la phase d'adaptation.

8. Appareil médical de formation d'images à ultrasons pour la représentation d'images (B) d'un plan de coupe d'un objet d'examen qui est affecté, du point de vue de la technique de transmission du son, d'hétérogénéités perturbatrices, comportant un réseau à ultrasons (4,101) qui possède une ouverture active prédéterminée d'émission (51,52) comportant des transducteurs élémentaires et comporte également une ouverture active prédéterminée de réception (E1, E2, E6) comportant une multiplicité de transducteurs élémentaires (W1,W2,...), un premier dispositif (111) de retardement de la réception servant à former une focalisation de réception standard, qui est valable pour un objet d'examen ne comportant aucune hétérogénéité perturbatrice, et un second dispositif (127 à 131) de retardement de la réception étant associé aux transducteurs élémentaires de l'ouverture active de réception, et comportant des moyens (133,160) pour faire fonctionner l'appareil de formation d'images à ultrasons pendant une phase d'adaptation et pendant une phase suivante de représentation d'images B, et qui comprennent un dispositif pour déterminer des valeurs de correction et qui mesure, pendant la phase d'adaptation, les effets perturbateurs conditionnés par les hétérogénéités et forme, à partir des valeurs de mesure, des valeurs de correction à l'aide desquelles les effets perturbateurs dûs aux hétérogénéités sont compensés pendant la phase suivante de représentation de l'image B, caractérisé par le fait que le dispositif (112 à 119 et 121 à 126) qui sert à déterminer des valeurs de correction, comprend un corrélateur (115), à l'aide duquel, pendant la phase d'adaptation, les signaux d'échos sont corrélés entre eux par l'intermédiaire d'une fonction de corrélation prédéterminée, qu'un premier dispositif (104) de retardement de l'émission, qui sert à former une focalisation d'émission standard, est associé aux transducteurs élémentaires de l'ouverture active d'émission (51,52), que le dispositif (112 à 119 et 121 à 126) servant à déterminer des valeurs de correction est raccordé, côté entrée, aux sorties du premier dispositif (111) de retardement de la réception, qui sert à former la focalisation de réception standard et, côté sortie, à un second dispositif de retardement de l'émission et/ou au second dispositif de retardement de réception (105 à 109 ou 127 à 131), qui sont associés aux dispositifs (104 ou 111) de retardement de l'émission standard ou de la réception standard et dont les retards sont déterminés par le dispositif (112 à 119 et 121 à 126) pour la détermination de valeurs de correction.

9. Appareil de formation d'images à ultrasons suivant la revendication 8, caractérisé par le fait que les signaux d'échos (u1, u2) de transducteurs élémentaires individuels (W1,W2,...) sont envoyés au corrélateur (115).

10. Appareil de formation d'images à ultrasons suivant la revendication 8 ou 9, caractérisé par le fait que le corrélateur (115) fait partie d'un calculateur librement programmable (134).

11. Appareil de formation d'images à ultrasons suivant l'une des revendications 8 à 10, caractérisé par le fait qu'un dispositif (116) servant à rechercher la position du maximum (M) de la fonction de corrélation (Q(t)) est branché en aval du corrélateur (115).

12. Appareil de formation d'images à ultrasons suivant la revendication 11, caractérisé par le fait qu'un dispositif d'addition (117) est branché en aval du dispositif (116) servant à rechercher la position du maximum.

13. Appareil de formation d'images à ultrasons suivant la revendication 12, caractérisé par le fait qu'en aval du dispositif d'addition (117) est branché un circuit d'alignement (118), qui amène en recouvrement les différences de temps de propagation, qui sont obtenues à partir des signaux d'échos des transducteurs élémentaires (W1,...) à partir de faisceaux d'exploration différents, selon la méthode des moindres carrés et en forme la moyenne.

14. Appareil de formation d'images à ultrasons suivant la revendication 12, caractérisé par le fait qu'en aval du dispositif d'addition (117) est branché un circuit (150) qui sert à former une droite de compensation (AG) et à former une différence, ou un filtre passe-haut (154).

15. Appareil de formation d'images à ultrasons suivant l'une des revendications 8 à 14, caractérisé par le fait qu'un dispositif de formation de la moyenne (119;152) est branché en aval du corrélateur (115).

16. Appareil de formation d'images à ultrasons suivant l'une des revendications 8 à 15, caractérisé par le fait qu'il est prévu un interrupteur (160), qui permet de déterminer la durée de la phase d'adaptation.

17. Appareil de formation d'images à ultrasons suivant l'une des revendications 8 à 16, caractérisé par le fait qu'un dispositif (114) est prévu pour la sélection de la gamme de profondeurs (z3 à z4), à partir de laquelle des signaux d'échos peuvent être prélevés pour la corrélation.
